**Europäisches Patentamt**

**European Patent Office**

**Office européen des brevets**

(19)

(11) **EP 0 894 660 A1**

(12) **EUROPEAN PATENT APPLICATION**

(43) Date of publication:
03.02.1999 Bulletin 1999/05

(51) Int. Cl.$^6$: **B60L 13/10**

(21) Application number: 97305637.7

(22) Date of filing: 28.07.1997

(84) Designated Contracting States:
AT BE CH DE DK ES FI FR GB GR IE IT LI LU MC NL PT SE

(71) Applicant: **Tozoni, Oleg V.**
Rockville, Maryland 20852 (US)

(72) Inventor: **Tozoni, Oleg V.**
Rockville, Maryland 20852 (US)

(74) Representative:
**Pratt, Richard Wilson et al**
**D. Young & Co,**
**21 New Fetter Lane**
**London EC4A 1DA (GB)**

(54) **Self-regulating system of high speed ground transportation based on permanent magnets**

(57)    The proposed Self-Regulating System of High Speed Ground Transportation Based on Permanent Magnets designated for magnetic levitation, stabilization, and propulsion of vehicles moving with high speed without friction.

The proposed system comprises two functionally connected and interacting with each other subsystems: (a) a Magneto-Dynamic Levitation and Stabilizing Self-Regulating System (MDLSS), and (b) a Permanent Magnet Linear Synchronous Motor (PMLSM). Both systems comprise permanent magnets and steel cores,

MDLSS provides levitation and stabilization of a vehicle suspended in magnetic field produced by its own permanent magnets while PMLSM produces propulsion force providing the assigned alternative velocity of the vehicle along the designated trajectory of the guideway by interaction of the magnetic field of the vehicle magnets with the current traveling wave in the stator winding powered by the current of constant frequency.

Each of said subsystems comprises two main parts: a fixed guideway/stator (which is common for both subsystems) including extended steel cores of MDLSS and extended three-phase windings of PMLSM, and moving together with the vehicle permanent magnets of the levitator of MDLSS and permanent magnets with steel cores of the rotor of PMLSM. Each of the subsystems is self-regulating and operates without fast response control system.

**EP 0 894 660 A1**

## Description

FIELD OF THE INVENTION

The present invention relates to magnetic levitation, stabilization, and propulsion of vehicles in a high-speed ground transportation system, and, more particularly, to magnetic levitation, stabilization, and propulsion self-regulating systems comprising permanent magnets and steel cores ensuring the stable flight with assigned alternative velocity of a vehicle propelled along a designated trajectory by a treveling current wave produced by three-phase sinusoidal current of costant frequency.

The proposed system comprises two functionally connected and interacting with each other subsystems: (a) a Magneto-Dynamic Levitation and Stabilizing Self-Regulating System (further referred to as MDLSS), and (b) a Permanent Magnet Linear Synchronous Motor (further referred to as PMLSM).

BACKGROUND OF THE INVENTION

Two types of suspension capable of providing the magnetic forces required for vehicle suspension are known in the art. They include:

1. Electromagnetic Suspension (EMS) wherein electromagnets on the vehicle are attracted to a guide-way which has ferromagnetic rails (Transrapid, Germany); and
2. Electro-dynamic Suspension (EDS) wherein super-conductive magnets on the vehicle are repulsed from a guide-way which has nonmagnetic conductive rails (Japanese Maglev).

Both of these systems have serious draw backs that delay their utilization for transportation needs.

EMS (Transrapid, Germany) fails to insure stable equilibrium of the vehicle without a fast-response automatic control system to control the size of the air gap between the electromagnet's poles and guide-way rails. Therefore, any failure in the control system or loss of current in the electromagnets may lead to a dangerous situation, and, possibly, to catastrophe. Moreover, the fast-response control system and also a large generator of current (with its own power supply) must be installed in the vehicle, so that the passenger/freight load comprises only a small fraction of the weight of the vehicle.

The EDS (Japanese Maglev) requires an on-board system for permanent cooling of super-conductive magnets. Failure to maintain the temperature strictly in pre-determined limits may lead to catastrophe. Moreover, although the super-conductive magnets produce a strong magnetic field, this field fails to provide sufficient forces for stable vehicle movement and, therefore, the EDS, similar to the EMS, also requires a fast-response control system and source of high power current to damp the vehicle vibration during turns. Besides, the strong magnetic field may be dangerous for passengers.

The other drawback of both systems is their low stiffness. It will be appreciated by those skilled in the art, that the coefficient of proportionality $f_s$ between the displacement and the increment of the internal stabilizing force is called "stiffness":

$$f_s = \partial F_s / \partial \delta$$

and represents the decisive parameter, i.e. the greater the stiffness, the smaller the displacement of the vehicle and, therefore, the better the quality of the magnetic suspension system.

Any suspension system functions by employing internal forces interacting between a magnetic field (produced by magnets located on the vehicle) and currents in guide-way rails (induced thereto by said magnetic field). As the distance from the magnets grows, the magnetic field subsides and the internal magnetic forces diminish, and their derivative - stiffness - diminishes at a more rapid (second-degree) rate.

The EMS system (Transrapid, Germany) never produces internal stabilizing forces. This system is internally unstable, and its stiffness is created and maintained artificially - by means of fast-response control system.

The poles of super-conductive magnets in the EDS system (Japanese Maglev) are covered with thick layers of thermo-insulation, and currents induced in the guide-way's rails are distributed over the layers' thickness. Accordingly the distance between the magnets' poles and the induced currents in the rails is greater than the size of the air gap between the magnets' poles and the rails. Moreover, the value of the current induced in the non-magnetic conductive rail during the magnets' movement is many times smaller than in the magnetic steel rail. This tends to reduce the stabilizing internal magnetic force and the stiffness, which is much lower than is necessary for the stable movement.

According to Lagrangian theorem known to those skilled in the art (Pol Appell: Traite de Mecanique Rationnelle. Paris, Gauthier-Villars, Etc.Editeurs), if at a certain position of a conservative system, its potential energy has a strict local minimum, then that position is a stable equilibrium point of the system, in order to provide stable vehicle flight along an assigned trajectory, it is necessary and sufficient that the potential energy of such a system had a strict local minimum at all points of the trajectory.

Disadvantageously, the magnets of the existing systems do not have an equilibrium position therein, and the magnetic field is distributed in such a way as to create destabilizing forces only, tending to attract the magnets to the respective iron cores.

In order to provide stability to the existing systems, a fast-response automatic control system is necessary. Such control is expensive and unfortunately, is not reliable at present.

It would be highly desirable to provide a vehicle suspension free of the drawbacks of the existing systems (Transrapid, Germany and Japanese Maglev).

Different magnetic levitation self-regulating systems disclosed in U.S. Patents Nos. 5,140,208; 5,218,257; and 5,319,275 (invented by the same inventor as the present invention), were proposed having enhanced stabilization forces designated for stable hovering of heavy bodies.

For example, U.S. Patent No. 5,140,208 discloses a Self-Adjusting Magnetic Guidance System for Levitated Vehicle Guide-Way, which employs new magnetic devices comprising two C-shaped steel cores affixed on the guideway and a group of permanent magnets (further referred to as PMs) affixed to the bottom of the vehicle. The magnetic flux threads the PMs and steel cores. Affixed to the guide-way, the steel cores stretch magnetic flux tubes exisiting in the air gap at the right and left sides of the PMs. At the shift of the PMs downwards by the weight of the vehicle, the magnetic flux tubes tend to shrink, and as a result, pull the PMs upwards to their equilibrium position by and engendered stabilizing force which is proportionate to the shift value. At any failure, the vehicle is maintained suspended within the magnetic field.

Disadvantageously, a lateral shift of the magnets engenders a substantial destabilizing force.

U.S. Patent No. 5,218,257 discloses a Magnetic Levitation Self-Regulating System, consisting of magnetic devices identical to those described in the above patent. These magnetic devices are connected in such manner that the destabilizing force in each of them is compensated by the stabilizing force of an adjacent unit. Disadvantageously, the destabilizing forces in the system prevail the stabilizing forces, therefore, the full compensation is not achieved.

U.S. Patent No. 5,319,275 discloses a Magnetic Levitation Self-Regulating System having enhanced stabilizing forces and solves the above problems by means of strip screens covering end faces of the cores and extended along the entire stator. However, in order to be effective, the screens should have considerable thickness (not less than 20% of the distance between the PMs in the unit), doubling the air gap between the PM and respective core, and thus substantially reducing the stabilizing force and the stiffness. This radically lowers the quality and increases the cost of the system.

It would be highly desirable to provide a magnetic levitation self-regulating system overcoming the disadvantages of the above described systems.

The known constructions of devices for propulsion of a vehicle - the linear synchronous motors based on superconductive magnets require multiphased power supply with variable frequency control. As a result, each individual moving vehicle must be powered by its own generator of alternative frequency, thus significantly complicating maintenance of the Maglev transportation system and considerably increasing expenses.

Economic and other factors require that the guideways of the Maglev transportation system approximately follow the path of automobile highways. The speed limit of the vehicles on the highways is approximately 55-65 m/h. In contrast, reasonably anticipated velocities for Maglev vehicles are 300 - 400 m/h, about 5-6 times higher than automobile velocities. Accordingly, if a guideway extends parallel to a highway a vehicle traveling on a curved portion of the guideway will experience a centrifugal force per unit of vehicle mass 25-35 times greater than the centrifugal force an automobile on the highway will experience. This result occurs because the centrifugal force $F_c$ is proportional to the square of the velocity:

$$F_c = m_v V^2 / R,$$

where $m_v$ is vehicle mass and $R$ is the guideway radius of the curvature.

As a result of this increased force it is necessary to provide a means for decelerating the vehicle when it traverses a curved portion of the guideway. Moreover, a means should also be provided to ensure the stability of the vehicle on the guideway. Both of these means should be provided in a reliable and inexpensive manner.

In known Maglev systems, deceleration along curves is provided by a rapid-response automatic system controlling vehicle movement by affecting the variable frequency generator which supplies power to the vehicle when it is between stations. Such systems are complex, expensive and unreliable.

The velocity of current traveling wave in the propulsion winding of the stator is proportional to its turn length. Thus, to vary velocity it is sufficient to vary the turn length at different sections of the stator, providing alternating velocity at these sections.

A linear synchronous motor having variable pole pitches is described in U.S. Patents: Number 5,208,496 and Number 5,225,726, the disclosure of which is incorporated herein by reference. Its drawback is a destabilizing force attracting the rotor magnets to the stator core.

## SUMMARY OF THE INVENTION

It is, therefore, an object of the present invention to provide a Magneto-Dynamic Levitation and Stabilizing Self-Regulating System - MDLSS and a Permanent Magnet Linear Synchronous Motor - PMLSM insuring the rigid and stable vehicle flight along a designated trajectory with assigned alternative velocity in the magneto-dynamic suspension.

It is another object of the present invention to provide a MDLSS ensuring strict local minimum of potential energy along the whole trajectory of the levitator movement.

It is still an object of the present invention to provide a MDLSS assigning a flexible trajectory corridor to a vehicle by exploiting the movement of PMs, non-linear specific reluctance of the steel, special shape of steel cores and special screens covering substantially the length of both sides of the cores' backs in order to create forces maintaining the stable flight of the vehicle along a guide-way.

It is yet an object of the present invention to provide a MDLSS, wherein the levitator's PMs and the stator's steel cores create such a distribution of the magnetic field in the air gap of the system where any deviation of the levitator from the given trajectory engenders the stabilizing forces tending to return the levitator on its trajectory.

It is yet an object of the present invention to provide a PMLSM, wherein the linear synchronous motor produces a propulsion force of such value to ensure the given value of the velocity of the vehicle in each point of the designated trajectory.

It is yet an object of the present invention to provide a PMLSM, wherein the linear synchronous motor uses permanent magnets in the rotor units, but as distinguished from those described in above patents, the destabilizing forces equal to zero at side displacements of a vehicle from designated trajectory.

It is yet an object of the present invention to provide a PMLSM construction that during vehicle movement it makes it possible to change the length of the pole pitch of the rotor in accordance with changing stator winding turn length and, thus, to use the traveling current wave to create the propulsion force.

The subsystem - MDLSS of the present invention was created as a system comprising identical units. Each unit reacts on external impacts causing displacements from the equilibrium position by creating two kinds of internal magnetic forces: a stabilizing force tending to bring the magnetic device back to the equilibrium position, and a destabilizing force tending to bring it out the equilibrium. The present invention proved that :

- it is possible to make the value of the stabilizing force equal to the value of the destabilizing force by sharpening its core tips;
- the destabilizing force can be considerably lowered by using saturated steel in the core backs;
- the conducting screen affixed on the lateral surface of the saturated steel core can almost totally suppress dissipation fluxes and, thus, maintain the needed level of saturation along the whole length of the core back.

According to the principles of the present invention, a MDLSS comprises four identical units installed on a common foundation determining the trajectory of movement and on the body (vehicle). Each unit comprises a stator assembly and a levitator assembly magnetically coupled to the stator assembly and movable with respect thereto. The stator assembly includes a pair of substantially identical elongated laminated steel cores, each including a back and a pair of substantially identical tips, the back having external and internal lateral surfaces. Preferably, the steel core has a C-shaped cross-section. Each of the tips is wider than the back and has a sharpened end thereon.

In each pair thereof, the cores are positioned symmetrically with their tips towards the tips of the opposite core. The stator assembly further includes non-magnetic conductive screens covering the external and internal lateral surfaces of the back of each core.

The levitator assembly includes four permanent magnets (elongated and rectangular in their cross-section) connected by rigid ties and positioned in two levels with similar magnetization vectors of two permanent magnets in each level. The respective permanent magnets in these two levels positioned one under another have the magnetization vectors of opposite polarity.

It is of essence that a distance between the sharpened ends of the tips of each core is substantially equal to a distance between middle points of the rectangular cross-sections of the permanent magnets positioned in each of said two levels. The permanent magnets of the levitator assembly are disposed in the air gap existing between the tips of the cores of the stator assembly.

The levitator assembly has an equilibrium position in which the permanent magnets in each of said two levels are situated centrally in the air gap between respective tips of the opposite cores and with the middle points of the permanent magnets in precise registration with the sharpened end of respective tips of the cores of the stator assembly.

The permanent magnets of the levitator assembly generate an original magnetic field and magnetize the steel cores of the stator assembly which in turn create a secondary magnetic filed, and, once the levitator assembly has been displaced from the equilibrium position, the original and the secondary magnetic fields create a stabilizing force returning the levitator assembly to the equilibrium position.

Preferably, the MDLSS comprises a common foundation having a bottom and a pair of spaced apart side walls (perpendicular to the bottom) for assigning a trajectory for a heavy body (vehicle) for moving therealong.

A first pair of substantially identical said units are installed symmetrically between the bottoms of the body and the common foundation, and the unit of a second pair of substantially identical said units is installed between respective side walls of the body and the common foundation in precise registration therebetween. It is clear that the stator assemblies of the units are installed on the common foundation, and the levitator assemblies of said units are installed on the body.

The stator assembly extends substantially the length of the pre-determined trajectory, with a distance between the respective tips of the opposite steel cores invariable along the length of the trajectory.

The levitator assembly extends substantially the length of the body and includes a plurality of substantially identical levitator sub-assemblies, each comprising said four permanent magnets connected by rigid ties and positioned in two levels with two permanent magnets of opposite polarity in each level, such that the adjacent permanent magnets in each two adjacent levitator sub-assemblies are of opposite polarity and have a certain period of alteration of the permanent magnets' polarity along the length of the body.

During the motion of the body along the pre-determined trajectory, the permanent magnets of the levitator assembly produce magnetic fluxes in the steel cores of the stator assembly. These magnetic fluxes alternate periodically with a frequency proportionate to the speed of the body and inversely proportionate to the period of alteration of the permanent magnets' polarity along the length of the body.

The permanent magnets in each of the two levels of the levitator assembly are magnetized parallel to a straight line connecting the sharpened ends of the respective said tips of the opposite cores. An orientation of magnetization in one of said two levels is opposite to an orientation of magnetization in another one of said two levels. Displacement of the permanent magnets in the direction parallel to the orientation of magnetization in any of said two levels towards one of the steel cores, engenders an internal destabilizing force which tends to further attract the magnet assembly to said one of the two steel cores, while displacement of the permanent magnets in the direction perpendicular to the direction of magnetization and the pre-determined trajectory, engender an internal stabilizing force tending to reduce the displacement and to bring the magnets back to the equilibrium position. Any turn of the levitator assembly around an axis parallel to the direction of magnetization engenders an internal stabilizing torque which tends to return the magnet assembly to the equilibrium position. The directions of these stabilizing and destabilizing forces are reciprocally perpendicular.

The shape of all the details, both the stator and levitator, are cylindrical with the generetrix parallel to the trajectory of the levitator movement (Axis **OX**). The main peculiarity of the MDLSS is its ability to insure stable flight of the levitator along the assigned trajectory without any active control system and any energy source. This means that any small deviation of the moving levitator from its trajectory engenders magnetic forces in the system which suppress this deviation.

If the magnets in the gap are immovable and disposed symmetrically then they are in unstable equilibrium. This means that any small shift $\Delta\mathbf{y}$ of the magnets in the direction parallel to the magnetization vector creates a destabilizing force $\mathbf{F_d}$ tending to attract the magnets to the nearest core. As the shift grows, the destabilizing force grows too. Meanwhile, the immovable magnets are in stable equilibrium in the direction perpendicular to both the magnetization vector and the trajectory. That means any small shift $\Delta\mathbf{z}$ of the magnets creates the stabilizing force $\mathbf{F_s}$ tending to reduce the shift and bring the magnets back to the original position. As the shift grows, the stabilizing force grows too. The directions of the stabilizing and the destabilizing force in the unit are reciprocally perpendicular.

The unique measures are undertaken in the present invention to reach the stable flight and hovering of the body along the trajectory, that is to suppress the destabilizing forces and to increase the stabilizing forces in the MDLSS. These measures include employing non-linear features of the steel of the cores, saturation of the back of each core, covering the lateral surfaces of the back of each core with conductive screens for suppressing the dissipation fluxes, and sharpening the ends of the tips of each core.

The proposed permanent magnet linear synchronous motor comprises a linear guideway/stator assembly (stationary part) and permanent magnet rotor assembly with synchronizing devices (moving part).

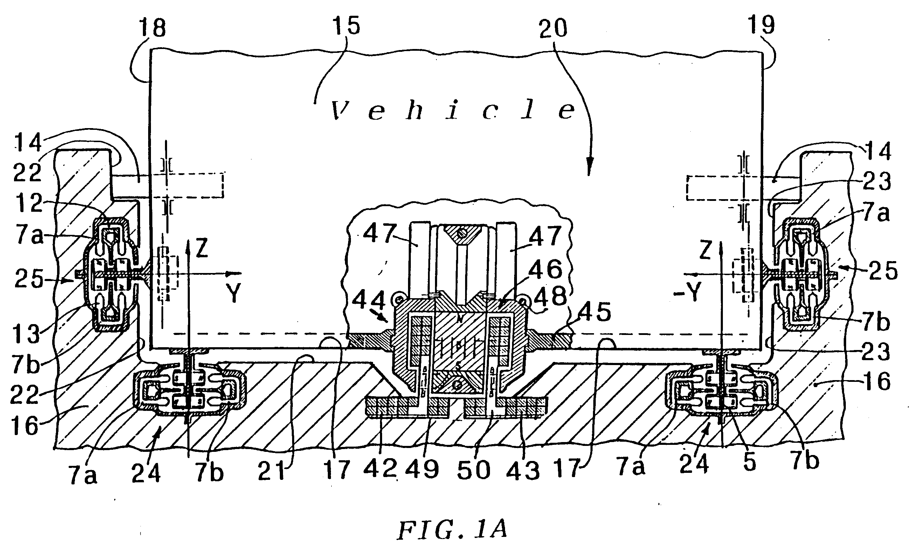

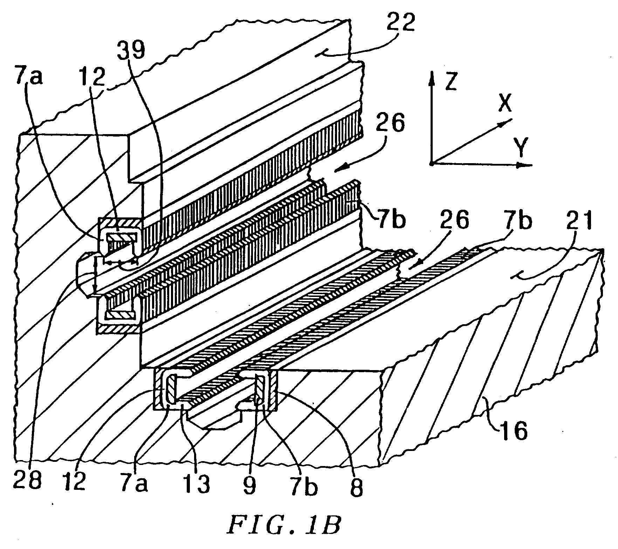

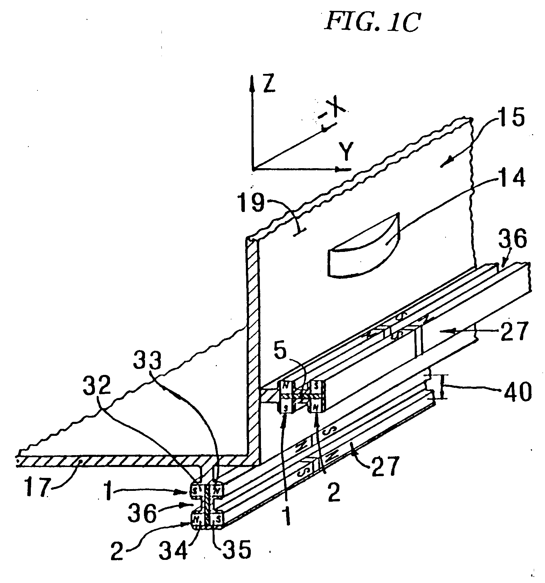

The rotor of the PMLSM consists of an even number of identical units (Fig.1) installed on the vehicle chassis in a row along the vehicle. Each unit contains two steel cores and one permanent magnet. Said steel cores are cylindrical in form and have "C"-shaped cross-sections with upper and lower core shoes placed opposite to each other. The permanent magnet is designed in the form of a rectangular parallelepiped with steel pole saddle-shaped shoes rigidly attached to it. Said permanent magnet is inserted into the gap between the core shoes and can be shifted vertically with respect to the cores. The magnetization vector of all magnets is vertical in direction. Polarities of the magnets belonging to the front half of the rotor are the same and opposite to those belonging to the back one. The cores belonging to each half of the rotor are rigidly coupled, however both halves can be smoothly drawn apart or together along the car, thus changing the distance between the rotor poles as the vehicle moves.

The guideway/stator of PMLSM consists of two mirror symmetrical parallel parts of the propulsion winding distributed along the whole stator length and powered by three-phase sinusoidal current of constant frequency. Every part includes a common concrete beam and the toothed holder attached to said beam, which bears the conductors of the three-phase winding. Every winding has vertical working segments containing one layer of copper buses and two multi-layer end-faces. The bottom end-face is rigidly attached to the concrete foundation of the guideway, while the upper one is not fixed and inserts into the hollow of the rotor core.

The stator winding is distributed non-uniformly along the guideway, which consists of three types of sections:

    1. an acceleration section in which the winding turn length gradually increases along the vehicle movement;
    2. a constant speed section with invariable winding turn length;
    3. a deceleration section in which the winding turn length gradually decreases along the vehicle movement.

Accordingly, the length and velocity of the current traveling wave is also different along different sections of the guideway.

When the permanent magnet is shifted downward the unit is put into operation; at that point, together with its cores, the magnet creates a two-loop magnetic circuit containing two air gaps. In this case, the working segments of both the left and the right-hand winding occur in the air gaps of said circuit and, because of the small size of the air gaps, the magnetic flux density is of considerable value (about $1T$). The traveling current waves created in the working segments of the winding sections interact with permanent magnetic field in the air gaps, thus engendering the propulsion force $F_x$ which propels the vehicle. When the permanent magnet is shifted upward the unit is disengages and at that point the magnetic flux density in the working segments of the winding falls nearly to zero. Once this has happened, the fluxes coming from each side of the magnet close through the upper end-faces of the windings. The propulsion force of an inactive unit is zero since all currents in the end-faces flow horizontally.

Both the synchronizing device and synchronizing mechanism are attached to the rotor and perform a coordination function between the length of the stator's winding turns and the rotor's pole pitch length during vehicle motion. Signal sensors must be installed at some points of the guideway along the acceleration or deceleration sections. When the vehicle passes the next sensor the synchronizing device of the rotor receives its signal and engages or disengages the next rotor units, thus increasing or decreasing in steps the rotor's pole pitch length. At that point, the synchronizing mechanism gradually draws the front and back rotor poles together or apart, thus assuring more precisely congruence between the rotor's pole pitch length and the stator's winding turns length.

Since there are no sensors along the constant speed sections, neither the synchronizing device nor synchronizing mechanism functions at that point and the vehicle moves with the invariable speed (acquired at the end of the acceleration section)

$$V_V = 2fL_Rn,$$

where $2n$ is the number of units put into operation.

We can now explain how the PMLSM works. We assume that the rotor comprises twelve units. At the initial point of the acceleration section the winding turn length is small but not less than the unit length $L_R$ and then gradually increases along this section. Approaching this section, the vehicle should increase speed

$$V_V = 2fL_R,$$

and its two central units of opposite polarities (unit No.6 and No.7) should be engaged. This means that the rotor pole pitch equals the winding's turn length. Only under this condition can the rotor be synchronized with the traveling current wave and initiate acceleration of the vehicle. Then, as the stator winding turn length increases, additional units are engaged, thus increasing the size of the pole pitch. For example, at turn length $2L_R$ additional units No.5 and No.8 are engaged, etc. -- until the winding turn length achieves value **1.5m.**, corresponding to vehicle speed $V_v$= **180m/s**.

Approaching curved-guideway sections, the length of the turns of the guideway winding decreases until it reaches the desired value, and then increases again. Accordingly, said synchronizing device and synchronizing mechanism work in agreement: the synchronizing device disengages the corresponding units and then (after the vehicle has passed the curved part of the guideway) engage them again, while another mechanism draws together and apart the front and back halves of the rotor units. As a result, the speed of the vehicle and, correspondingly, centrifugal force decreases until the vehicle accomplishes the turning.

As each additional pair of the units is engaged, the propulsion force increases approximately by 1.7 ton reaching the maximum value >10 ton, when all units are operating. During deceleration all actions proceed in reverse order. The example of the approximate calculation of the PMLSM is shown below (in section "Detailed description").

Therefore, when supplying the propulsion winding with sinusoidal current of constant frequency **f=60 Hz** the vehicle will move along the trajectory assigned by the stator with preset optimal speed **V(s)** (where **s** is a trajectory coordinate), decelerating or accelerating its speed before or after turning respectively without exceeding the permissible centrifugal force. To attain this effect the guideway winding turn length must correspond to the radius of the curvature of the assigned trajectory.

The initial acceleration of the vehicle departing the station could be provided with the help of direct current motors installed on the supporting wheels of the vehicle and supplied with power from direct current contact busbars. This peculiarity makes the power supply of the propulsion winding of the proposed transportation system significantly simpler and cheaper. The propulsion winding can be switched in any network with frequency **f=50 Hz**. For example, if a high voltage line is built stretching along the guideway and step-down transformer substations are installed at short intervals, then the moving vehicle can switch on and off the power of the corresponding part of propulsion winding, thus eliminating the need for complex control and regulation of the frequency and voltage of propulsion currents.

These and other objects of the present invention will become apparent from a reading of the following specification taken in conjunction with the enclosed drawings.

BRIEF DESCRIPTION OF THE DRAWINGS

Figure 1A is a schematic cross-sectional view of the vehicle assembly together with the linear synchronous motor( PMLSM) and magnetodynamic levitation and stabilizing self-regulation (MDLSS) system.

FIG.1B is a perspective view of the left-side section of the guideway-stator in which, for purposes of illustration, the protruding arms of the conducting screens have been cut away.

FIG.1C is a perspective view of the right-side section of the vehicle-levitator.

FIG.2A is a cross-sectional, front view of a single unit as a component of the MDLSS system, constructed in accordance with principles of present invention;

FIG.2B is a side view of the portion of the magnets are assembled in two layer, taken along the lines 2B-2B of FIG.2A;

FIG 2C is a partial cross-sectional view (drawn to an enlarged skale) of the air-gap segment between the sharp end of the core tip and the magnet pole, explaining the formation of a stabilizing force when the magnets are shifted downward.

FIG.3A shows graphical profiles of the stabilizing and destabilizing forces' distribution in the unit of the present invention as functions of the displacement of magnets along the gap and across the gap respectively;

FIG.3B shows graphical profiles of the stabilizing and destabilizing forces' distribution as functions of the displacement of magnets along the gap and across the gap in the unit, which is turned at right angles to the unit of Fig.3A;

FIG.3C is a graph of the resulting force surface corresponding to the local maximum of the potential energy in the point of unstable equilibrium;

FIG.3D is a graph of the resulting force surface corresponding to the local minimum of the potential energy in the point of stable equilibrium;

FIG.3E is a graph of the resulting force surface taking a shape of plain disk at the indifferent equilibrium.

FIG.4 is a schematic drawing of two rigidly connected subsystems.

FIG.5 is a schematic drawing of the rigidly connected eight units (or four subsystems of FIG.4) placed into vertices of a square.

FIG.6 shows graphs of the distribution of the magnetic flux density and specific magnetic force along cross-section profile of a core tip.

FIG.7 shows graphs of relative magnetic permeability of electrical steel and its specific magnetic reluctance as functions of magnetic flux density of the steel.

FIG.8A is the complete equivalent scheme of four loop magnetic circuit of the unit of the present invention;

FIG.8B is the equivalent scheme of two loop magnetic circuit of the unit of the present invention.

FIG.9 shows graphs of the stabilizing and destabilizing forces as functions of the assembled magnets' shifts in the real model.

Figures 10A and 10B are, respectively, partial cross-sectional and axial sectional views of the linear synchronous motor.

Figure 10C is a prospective view of the linear synchronous motor of the present invention shown in Figs.1A-10B sectioned in the plane parallel to the central axis of the motor.

Figure 10D is a prospective view of the propulsion winding assembly of the linear synchronous motor of the present invention showing schematically acceleration, constant velocity and deceleration sections of the stator and how the length of turns of the stator winding changes at these sections.

Figure 11 is scheme of left-side winding of the stator and distribution of the working segments and turns along x-axis.

Figure 12 is scheme of the magnetic circuit of the rotor.

Figure 13 is scheme of power supply of a stator fragment.


DETAILED DESCRIPTION


Referring to Figs. 1A, 1B and 1C, a heavy body (or vehicle) 15 moves along a guide-way which comprises a common foundation 16 made of a suitable non-conducting and non-magnetic material, for example, concrete. The vehicle 15 has a bottom 17 and two spaced apart side walls 18 and 19, substantially perpendicular to the bottom 17. The common foundation 16 has an elongated cavity 20 which determines a trajectory of the vehicle's 15 movement. The cavity 20 in the common foundation 16 has a bottom 21 and a pair of side walls 22,23. The vehicle 15, as best shown in Fig. 1A, moves within the cavity 20, such that the bottom 17 of the vehicle 15 levitates above an is parallel to the bottom 21 of the cavity 20, while the walls 18,19 positioned between the walls 22,23. It is necessary to provide for stable flight and hovering for the vehicle 15 along the trajectory predetermined by the cavity 20 in the common foundation 16.

It will be appreciated by those skilled in the art, that, as best shown in Figs. 1A-1C, the axis OX is parallel to the trajectory of the vehicle's 15 movement, the axis OY is substantially perpendicular to the trajectory, and the axis OZ is perpendicular to the bottom 21 of the common foundation 16.

As best shown in Figs. 1A-1C, the stable movement of the vehicle 15 is provided by units 24 symmetrically installed between the bottom 17 of the vehicle 15 and the bottom 21 of the common foundation 16 , and by units 25 symmetrically installed between side walls 18, 22 and 19,23 of the vehicle 15 and the common foundation 15, respectively. The units 25, as well as the units 24, are installed in precise registration with each other, i.e. in precise symmetry relative to the longitudinal axes of the common foundation 16 and the vehicle 15.

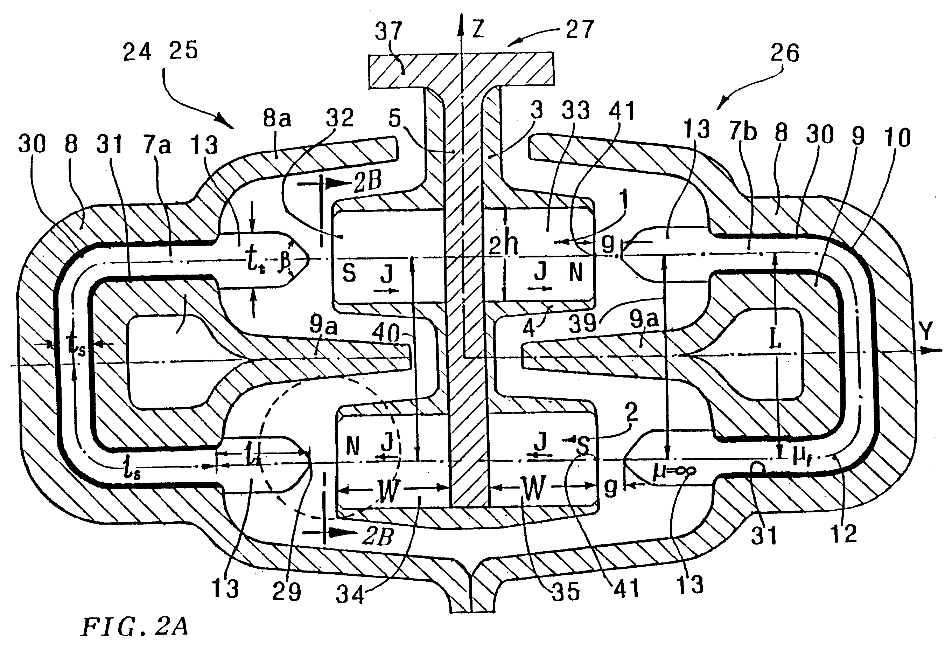

As best shown in Figs. 1A, 1B, 1C and 2A, each unit 24 or 25 (the units 24 and 25 are substantially identical units) comprises a stator assembly 26 and a levitator assembly 27 magnetically coupled to each other.

The stator assemblies 26 of the units 24 and 25 are installed on the bottom 21 and the and side walls 22 and 23 of the common foundation 16, and thereby constitute a stator - guide-way assembly which is a stationary (immovable) structure. The stator assemblies 26 are connected by rigid ties, and extend the whole length of the trajectory of the vehicle's movement determined by the common foundation 16.

The levitator assemblies 27 of the units 24 and 25 are installed on the bottom 17 and the side walls 18,19 of the vehicle 15, and extend the whole length of the vehicle 15. The levitator assemblies 27 are bonded by rigid ties across the vehicle 15, are immovable relative to the vehicle 15, and movable (as one whole with the vehicle 15) relative to the stator assemblies 26.

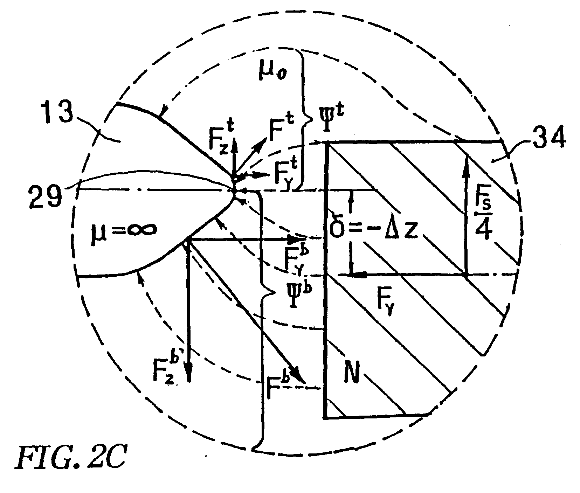

The stator assembly 26 of each unit 24 or 25 includes a pair of substantially identical elongated laminated steel cores 7a and 7b, preferably having C-shaped cross-section. As best shown in Figs. 1A, 1B and 2A, each core 7a, 7b has a back 12 (extending a length $2l_s$ and having a width $t_s$ ) and a a pair of identical tips 13. The tips of the core 7a extend the length $l_t$ from the back 12 of the core 7a towards the symmetrical tips 13 of the opposite core 7b. The width $t_t$ of the tips 13 is bigger than the width $t_s$ of the core 7a,7b. The back 12 is saturated, while the tips 13 of the core 7a,7b are not saturated. The cores are connected in such a manner that the gap 28 between the respective tips 13 of the opposite cores 7a and 7b is invariable along the entire trajectory of the vehicle's 15 movement. As best shown in Fig. 2A and 2C, the tips 13 have the sharpened end 29.

The back 12 has an external lateral surface 30 and an internal lateral surface 31. Both surfaces 30 and 31 are covered with non-magnetic conductive, for instance, aluminum and brass screens 8,9,10 and 11.

The levitator assembly 27 of the unit 24 or 25 includes four permanent magnets 32, 33, 34 and 35, which are connected by rigid non-magnetic ties and positioned in two levels 1 and 2. As best shown in Fig. 2A, the magnets 32 and 33 located in the level 1 are of the same polarity, similar to the magnets 34 and 35 located in the level 2, which are also of the same polarity, directed however opposite to the polarity of the magnets 32 and 33 in the level 1. It means that the magnets located one under another in the levels 1 and 2, i.e. magnets 32-34 and 33-35 are of the opposite polarities. All four permanent magnets 32-35 are the rear-earth permanent magnets "Crumax" (with dimentions 2h x W) and substantially rectangular in their cross-section.

An iron insertion strip 5 is inserted symmetrically between two magnets in each level 1 or 2, and protrudes through both levels 1 and 2, thereby rigidly connecting the permanent magnets 32-35 in a magnet assembly 36. The insertion strip 5 has an extension 37, by means of which the insertion strip 5 connects the whole magnet assembly 36 of the levitator assembly to the bottom 17 of the vehicle 15. The permanent magnets are connected by the rigid strip 5 and fixed by non-magnetic corner plates 3, channel bars 4, and plates 6 in such a manner that in the cross-section in the plane X=const, the magnetization vectors J in the different layers 1 and 2 are directed contrarily in each cross-section.

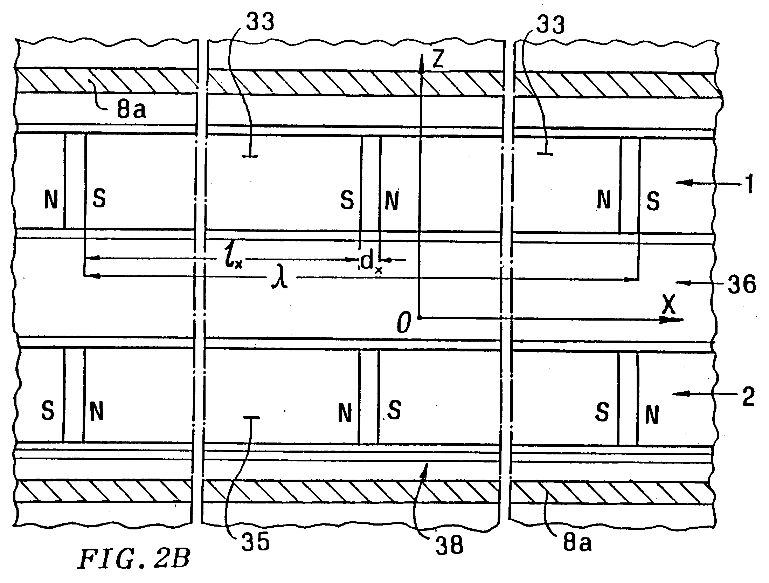

As best shown in Figs. 1C and 2B, along the length of the vehicle 15, the polarities of the permanent magnets periodically alternate with the period λ._ It, therefore, for sake of simplicity, may be considered, that along the length of the vehicle 15, a plurality of substantially identical levitator sub-assemblies 38 are positioned (each identical to the levitator assembly 27), such that in each two adjacent levitator sub-assemblies 38 the adjacent magnets are of opposite polarity.

Once the above-described stator assemblies 26 have been installed onto the common foundation 16, and the above-described levitator assemblies 27 have been affixed to the vehicle 15 (with the polarity of the permanent magnets in each level 1 and 2 periodically alternating along the length of the vehicle 15), and the vehicle 15 has been placed into the cavity 20 in the common foundation 16, the permanent magnets 32-35 of the levitator assembly 27 are becoming positioned in the air gap 28 between the tips 13 of the stator assembly 26. It is of essence that the distance 39 between the sharpened ends 29 of the tips 13 is equal to the distance 40 between the middle points 41 of the rectangular sections of the magnets (32-34 or 33-35) positioned one under another in different levels 1 and 2. Besides, in the air gap 28, the magnets 32-35 are positioned centrally, such that the gaps g between each magnet 32-35 and the sharpened end 29 of the respective tip 13 are equal.

The permanent magnets 32-35 produce an original magnetic field and magnetize the steel cores 7a and 7b, which, in turn, create a secondary magnetic field. Any deviation of the levitator assembly from the equilibrium position relative to the stator assembly changes distribution and interaction of the magnet fluxes of the original and the secondary magnet fields, and therefore, creates and changes different forces resulting from the interaction between the original and the secondary fields in the unit 24 or 25.

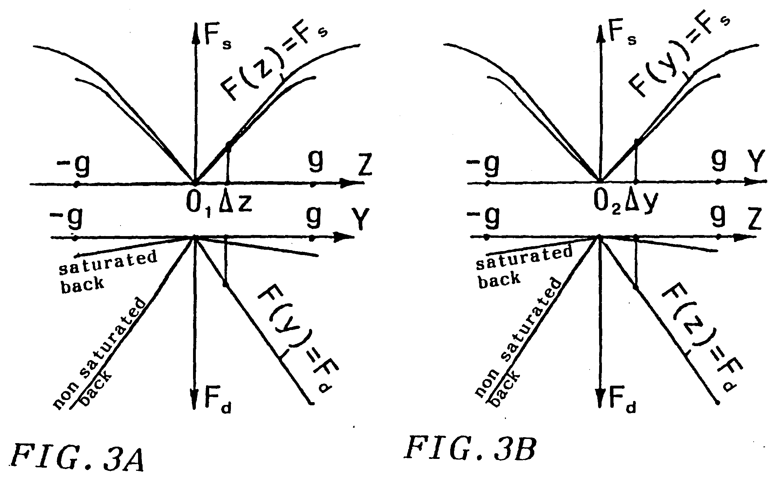

Referring again to Fig. 2A, if the magnet assembly 36 in the air gap 28 is immovable and is disposed symmetrically, then the levitator assembly 27 is in unstable equilibrium with respect to the axis OY. It means that, as best shown in Fig. 3A (the lower diagram), any small deviation

$$\delta = \Delta y$$

of the magnet assembly 36 along the axis OY towards the respective nearest core 7a or 7b, creates a destabilizing force $\underline{F}_d$ tending to increase the deviation and to attract the magnets to this nearest core. As the deviation $\Delta y$ grows, the force $F_d$ grows until the magnets touch the tips 13 of this nearest core 7a or 7b. Meanwhile, the immovable magnet assembly 36 is in stable equilibrium with respect to the axis 0Z. That means that any small deviation

$$\delta = \Delta z$$

of the magnets along the axis **0Z** creates the stabilizing force $F_s$, best shown in Fig 3A (the upper diagram), tending to reduce the deviation and bring the magnets back to the original position. As the deviation $\Delta z$ grows, the stabilizing force also increase until it reaches some magnitude $F_{smax}$ and then declines. The directions of the forces $F_s$ and $F_d$ in the unit are reciprocally perpendicular. It means that, for the units 24 disposed between the bottoms 17 and 21 of the vehicle 15 and the common foundation 16, the force $F_s$ will provide a stable lifting of the vehicle 15 above the bottom 21 of the common foundation 16 (thereby maintaining the vehicle at a certain required level), while, for the units 25 disposed between the side walls 18-22 and 19-23, respectively, the force $F_s$ will provide a certain distance between these side walls 18-22 and 19-23, thereby stabilizing the movement of the vehicle from both sides.

Besides, the destabilizing forces $F_d$ (parallel to the axis OY) created in the units 24 and tending to attract the magnets to the tips 13 of the nearest core, are compensated by the stabilizing forces $F_s$ (parallel to the axis OY) created in the units 25. Similarly, the destabilizing forces $F_d$ in the units 25 (parallel to the axis OZ) are compensated by the stabilizing forces $\mathbf{F_s}$ in the units 24 (parallel to the axis OZ). As best shown in Figs. 3A an 3B, the stabilizing forces Fs and destabilizing forces Fd in each unit 24 or 25 are perpendicular to each other. But, since the units 24 are positioned perpendicular to the units 25, the stabilizing force $\mathbf{F_s}$ in the units 24 is parallel to the destabilizing force $\mathbf{F_d}$ in the units 25 (and vice-versa) and is applied to the respective units in the direction opposite to the destabilizing force , thereby tending to compensate the destabilizing force created by a deviation from the equilibrium.

It is clear that to provide the stable hovering of the vehicle 15 within the common foundation 16, the stabilizing forces in the system must prevail the destabilizing forces.

In order to increase the stabilizing forces and to decrease the destabilizing forces, the following unique measures have been undertaken in the present invention:

- the destabilizing forces have been considerably lowered by using saturated steel in the backs 12 of the cores 7a and 7b;
- the value of the stabilizing force has been made greater or at least equal to the respective destabilizing force by means of sharpening the ends 29 of the tips 13;
- the destabilizing forces have been considerably reduced by using non-linear properties of the steel cores, almost totally suppressing dissipation fluxes by means of covering the lateral surfaces of the cores' backs 12 by conducting screen, thereby maintaining the needed level of saturation along the whole length of the backs12.

The following discussion will facilitate the better understanding of the processes in the units 24 or 25, and the system as a whole.

The unique characteristics of the units 24 and 25 permit the MDLSS to be designed as an assembly of units connecting separately all the core couples (stator) and all the magnet couples (levitator) by rigid ties. The permanent magnet assembly 36 in each pair of units 24-25 are tied in such a way that the direction of their magnetization vectors **J** are reciprocally perpendicular and the generetrix of all the cylindrical parts are parallel to each other, as best shown in Fig.1A. Then, the destabilizing force $F_d$ of one unit, for instance,24, is compensated by the stabilizing force $F_s$ of another, for example, 25.

The rigid ties connecting the magnets 32-35 of all the units into the overall levitator part of the MDLSS perform the following functions:

1. superpose all the equilibrium points $0_i$ of the magnets 32-35 into one common equilibrium point **0** of the overall levitator part of the MDLSS;
2. make the shifts $\Delta y$ and $\Delta z$ of the magnets interdependent:

$$\Delta y_i = \Delta z_{i+1},$$

$$\Delta z_i = \Delta y_{i+1};$$

3. create the proportional relation between the shifts $\Delta y$, $\Delta z$ of the magnets and turnings $\alpha_x$, $\alpha_y$, $\alpha_z$ of the overall levitator part around the coordinate Axes **0X, 0Y, 0Z**;
4. summarize all the external forces and torques, applied to the overall levitator part.

It will be appreciated by those skilled in the art that the vehicle 15 carrying the overall levitator part of the MDLSS and providing rigid ties between the permanent magnets 32-35 can be considered as the overall levitator part of the MDLSS.

The following conditions of stability apply to the MDLSS.

The vehicle 15 (like any solid body in free space) possesses six degrees of freedom: three deviations $\Delta_x$, $\Delta_y$, $\Delta_z$, along the Cartesian Axes and three rotation angles $\alpha_x$, $\alpha_y$, $\alpha_z$ around these Axes. To attain the stable suspension of the vehicle 15 traveling along its trajectory, the MDLSS should automatically suppress five out of the six degrees of freedom. This condition of stability is achieved in the MDLSS in question by providing such a distribution of the secondary sources of the magnetic field in the system (that is, molecular magnetization currents in the cores 7a,7b and eddy currents in the screens 8-11) that any deviation $\delta$ of the vehicle 15 from its trajectory engenders the forces tending to return it to its original position.

The forces and force torques acting on the vehicle are the partial derivatives of the potential energy **E** of the system. Applying the Lagrangian Theorem of stability to the MDLSS, we conclude that the position of the vehicle 15 traveling along its trajectory is stable if it corresponds to a local minimum of the potential energy **E** of the system.

In the MDLSS with the vehicle 15 moving with the speed $V > V_0$, the local minimum of potential energy $E$ is provided along the whole trajectory. To prove that directly it is sufficient to determine $E$ in terms of the explicit function of two shifts and three turnings in the vicinity $\delta$ of the assigned trajectory (Axis 0X) and then to show that values of $E$ are minimal along the trajectory.

The potential energy of MDLSS is an abstract conception. There are no devices for directly measuring its values. We can measure just only external forces $F$, applied to the vehicle 15 at its displacements from the equilibrium. According to Newton's Third Law these forces are equal and opposite to the internal (magnetic) forces of the system. All the following considerations deal with external forces, utilizing this connection.

According to Lagrangian Theorem, in the vicinity of stable equilibrium of the vehicle at any its shift the potential energy may increase only as the result of work of the external forces. At the points of the equilibrium (that is, along the assigned trajectory) the main vector $F$ and the main torque $M$ of the internal forces, acting on the vehicle 15, should equal zero; while in the vicinity

$$\delta \leq \Delta y = \Delta z$$

of the equilibrium (i.e., in the vicinity of the assigned trajectory) they should be negative. Thus, any little deviation $\delta_l$ of the vehicle 15 from the trajectory or turning $\alpha_i$ creates a counteracting force or torque. In this case, the equilibrium of the vehicle 15 is stable.

Since the trajectory of the vehicle 15 movement coincides with the Axis OX, the shifts and turnings are equal to the coordinates of its center of gravity:

$$\Delta y = y, \quad \Delta z = z, \quad \Delta \alpha_i = \alpha_i.$$

Hence, the conditions of stability of the vehicle 15 movements expressed through internal forces should be written as follows:

$$F_y = -\partial E / \partial y = (-y) \partial F_y / \partial y; \qquad F_z = -\partial E / \partial z = (-z) \partial F_z / \partial z;$$

$$M_x = -\partial E / \partial \alpha_x = (-\alpha_x) \partial M_x / \partial \alpha_x; \qquad M_y = -\partial E / \partial \alpha_y = (-\alpha_y) \partial M_y / \partial \alpha_y; \qquad (1)$$

$$M_z = -\partial E / \partial \alpha_z = (-\alpha_z) \partial M_z / \partial \alpha_z.$$

It is clear that, in the presence of minimal potential energy, the magnetic forces and torques at the points of the trajectory should be zero, and in the vicinity $\delta$ of the trajectory they should grow in proportion to shifts or turnings taken with the opposite sign.

One of the functions performed by the rigid ties, which is discussed above (i.e., the proportional relation between shifts $y$, $z$ and turnings $\alpha_x$, $\alpha_y$, $\alpha_z$ of the vehicle 15 of MDLSS), essentially simplify the proof, transforming the complicated functions of five variables (the potential energy $E(y, z, \alpha_x, \alpha_y, \alpha_z)$ and force $F(y, z, \alpha_x, \alpha_y, \alpha_z)$) into depictible functions of two variable coordinates $y$, $z$ of regular space $E(y,z)$ and $F(y,z)$.

Let us now consider a subsystem, best shown in Figs. 1A, 1B and 1C, comprising two units 24 and 25 superposed in such a way that the magnetizing vectors $J$ of their magnets are reciprocally perpendicular to each other. The rigid ties connect the equilibrium points $0_1$ and $0_1$ of the magnets belonging to the units 24 and 25 into one common equilibrium point $O_i$ of the levitator of the subsystem.

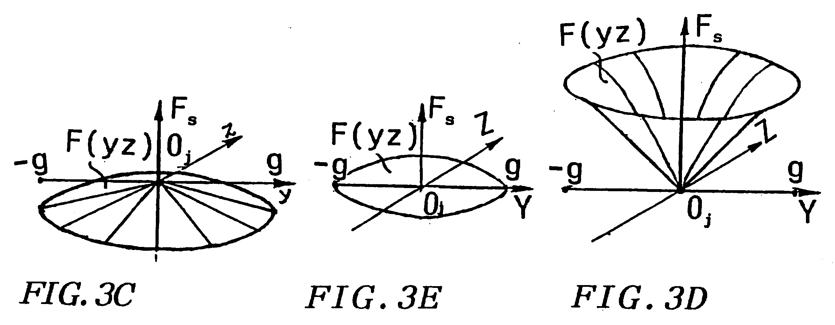

As best shown in Figs. 3C-3E, an abstract mathematical space is determined by the coordinate system $(y,z,F)$, where $y$ and $z$ are the deviations of the levitator in the plain perpendicular to its trajectory (i.e., the Axis 0X), and $F$ is an external force that has to be applied to the levitator shifted into point $(y,z)$ to compensate for the internal magnetic forces $(F_s$ and $F_d)$. Let us consider that in this "space" the external force $F$ is positive if it is directed out of the equilibrium $0_i$ and negative if it is directed toward it (whatever is its direction in regular space). In the coordinate system $(y,z,F)$, the tip of the vector of the external force $F(y,z)$ (the function of the levitators shifts) forms a surface, shown in Fig.3C, that we will call the "force surface" $F(y,z)$ of the subsystem of two units 24 and 25 with perpendicular vectors of magnetization $J$. After the units 24 and 25 are connected, the stabilizing forces of both units $F_{s1}$ and $F_{s2}$ (as well as destabilizing forces $F_{d1}$ and $F_{d2}$) become reciprocally perpendicular and are summarized like vectors, as follows:

$$F_{su} = \sqrt{(F_{s1}^{2} + F_{s2}^{2})} \ , \quad F_{du} = \sqrt{(F_{d1}^{2} + F_{d2}^{2})}$$

where $F_{su}$ and $F_{du}$ are resulting stabilizing and destabilizing forces respectively. In such a construction, the deviations of the magnet become interdependent:

$$z_{1} = y_{2} \quad \text{and} \quad z_{2} = y_{1}$$

and the resulting deviation $\delta$ of the levitator of the subsystem is determined by the formula:

$$\delta = \sqrt{(\Delta z_{1}^{2} + \Delta y_{1}^{2})} = \sqrt{(\Delta y_{2}^{2} + \Delta z_{2}^{2})} = \sqrt{(z^{2} + y^{2})}$$

In the vicinity of the equilibrium of a separate unit 24 or 25 (before connecting in the subsystem) the forces $F_s$ and $F_d$ were proportional to the values of the deviations along the coordinates $\Delta z=z$ and $\Delta y=y$, i._.,

$$F_{s1} = z\partial F_{s1}/\partial z, \quad F_{d1} =$$

$$y\partial F_{d1}/\partial y, \quad F_{s2} = y\partial F_{s2}/\partial y, \quad F_{d2} = z\partial F_{d2}/\partial z,$$

where $\partial F_{si}/\partial \delta$ and $\partial F_{di}/\partial \delta$ are the stiffness of the forces. In the subsystem, after the units 24 and 25 have been connected together, the forces $F_{su}$ and $F_{du}$ are proportional to the value of the resulting deviation $\delta$:

$$F_{su} = \sqrt{(F_{s1}^{2} + F_{s2}^{2})} = \sqrt{(z^{2} + y^{2})}\partial F_{s}/\partial \delta = \delta\partial F_{s}/\partial \delta$$

$$F_{du} = \sqrt{(F_{d1}^{2} + F_{d2}^{2})} = \delta\partial F_{d}/\partial \delta$$

Hence, one can see that in the vicinity of $0_j$ (the subsystem's equilibrium) the resulting force surfaces $F_{su}(y,z)$ and $F_{du}(y,z)$ are the lateral surfaces, of the coaxial circular cones with a common vertex at point $0_j$. As shown in Figs. 3A and 3B, the upper cone formed by the stabilizing forces, is turned upside-down. Its vertex is in the equilibrium $0_j$, its base is parallel to the plane F=0, and its height

$$h_{s} = F_{smax}$$

and is proportional to the stiffness $\partial F_{s}/\partial z$. The bottom cone is formed by the destabilizing forces and is situated below the plane F=0. Its base is a circle of radius $g$, and its height

$$h_{d} = F_{d}(g),$$

proportional to the stiffness $\partial F_{d}/\partial y$.

In summarizing the ordinates of the two obtained cones, the rigid tie creates a new resulting force surface. In as much as $F_d$ and $F_s$ are opposite in direction, the resulting force surface may take three different shapes, shown in Figs. 3C, 3D, and 3E, depending on the ratio of the stiffnesses $\partial F_{s}/\partial \delta$ and $\partial F_{d}/\partial \delta$ such as:

1. Given that $\partial F_{s}/\partial \delta < \partial F_{d}/\partial \delta$, the resulting surface is a cone corresponding to the local maximum of the potential energy in the point $0_j$ of unstable equilibrium, as shown in Fig. 3C;

2. Given that $\partial F_s/\partial \delta > \partial F_d/\partial \delta$ the resulting surface is an overturned cone corresponding to the local minimum of the potential energy in the same point $0_j$ to become the stable equilibrium , as shown in Fig.3D;

3. Given that

$$\partial F_s/\partial \delta = \partial F_d/\partial \delta,$$

the resulting surface takes a shape of plane disk of radius $g$ with the center in the point $0_j$ of the indifferent equilibrium, as shown in Fig.3E.

The energetic surface of the subsystem obtaining by integration of the force surface represents a paraboloid with the extreme in the point $0_j$ of the levitator's equilibrium. Under the condition $\partial F_s/\partial \delta > \partial F_d/\partial \delta$ this extreme becomes its minimum.

Now we will prove the following lemma:

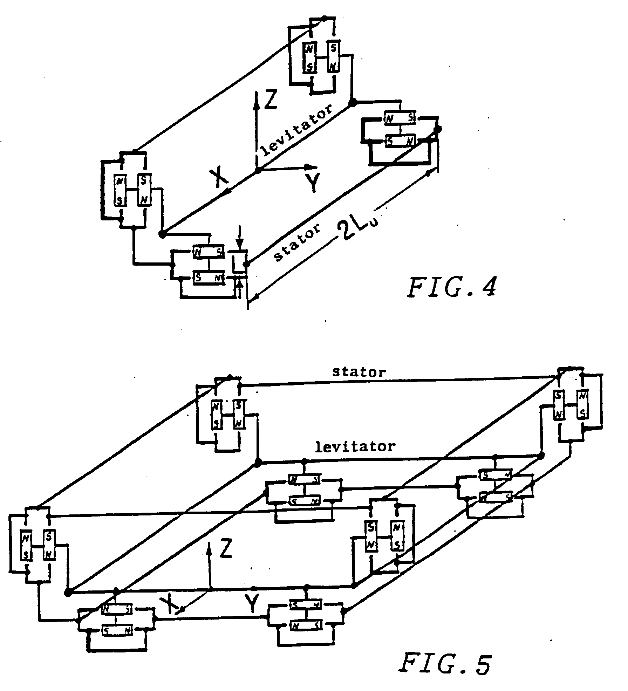

In order to construct the MDLSS which would insure the stable movement of the vehicle 15 along the trajectory assigned by the stator assemblies 26 in the cavity 20 of the common foundation 16, in other words, the system, having the local minimum of the potential energy in the space of two shifts and three turnings, it is necessary and sufficient to assemble it of four rigidly connected subsystems, best shown in Fig.4, each of which would have a local minimum of potential energy in the point $0_j$ of the space of two shifts.

The presence of the minimum of the energy means that the point $0_j$ is an equilibrium of the levitator belonging to a j-subsystem and any deviation ($\Delta y$ and $\Delta z$) on the plane $X = 0$ causes counteracting forces

$$F_y = \Delta y \partial F_y/\partial y \quad \text{or} \quad F_z =$$

$$\Delta z \partial F_z/\partial z$$

tending to return the levitator to the equilibrium. Therefore, connecting any two of the subsystems with a rigid tie of length $2L_u$ ($L_u \gg L$) paralleled to the coordinate Axis $0X$ we insure the stability of the composed subsystem towards its turnings $\alpha$ around two perpendicular Axes $0Y$ and $0Z$. Actually, each turning $\alpha_y$ of the composed subsystem leads to the deviations $\pm \Delta z = a_y L_u$ (Fig.4) of its levitators and creates a pair of forces $\pm F_z$ counteracting the turning. Similarly, the turning $\alpha_z$ creates a counteracting pair of forces $\pm F_y$. Taking two pairs of subsystems and connecting them with rigid ties of length $2L_u$ and parallel to the Axes $0X$ and $0Y$ we obtain the MDLSS having the local minimum of potential energy along the assigned trajectory, and, therefore, stable with regard to all external impacts, as shown in Fig.1A.

In such a MDLSS the force surfaces of all four subsystems are the lateral surfaces of overturned cones. Assembly into an MDLSS makes them coaxial and summarizes them in one common surface

$$F_\Sigma(y, z, a_x, a_y, a_z) = F_{\Sigma l}(y,z),$$

since

$$a_x = z/L_u, \quad a_y = y/L_u, \quad a_z = z/L_u$$

and the turnings are proportional to the shifts. The energetic surface of the MDLSS takes a shape of paraboloid with the minimum point situated along the trajectory assigned by the stator.

The proven lemma reduces the problem of determining conditions for stable movement of the MDLSS levitator to those providing a minimum of potential energy of each of the subsystems comprising two units (resolved above).

Based on the above discussion, the following statement is formulated:

In order to stabilise movement of the MDLSS vehicle 15, it is necessary and sufficient that the following condition be fulfilled in each unit: the stiffness $\partial F_s/\partial z$ of the stabilising force has to exceed the stiffness $\partial F_d/\partial y$ of the destabilising force in the vicinity of the equilibrium. This means that the following inequality should be satisfied:

$$\partial F_s/\partial z \; > \; \partial F_d/\partial y \tag{2}$$

The greater the difference between the right-hand and left-hand parts of this inequality, the more MDLSS stability can be reached.

To verify this statement it is sufficient to compose the expressions for the components $F_y$, $F_z$, $M_x$, $M_y$, $M_z$ of the main vector and torque of the magnetic forces acting on the levitator of the system comprising eight units placed into the vertexes of a square with a side $2L_u$, as shown in Fig. 5. If the inequality (2) is fulfilled then with the relations:

$$F_{s1} \; = \; F_{s2} \; = \; F_{s3} \; = \; F_{s4}, \qquad F_{d1} \; = \; F_{d2} \; = \; F_{d3} \; =$$

$$F_{d4}$$

and

$$\Delta_y \; = \; \Delta_z$$

(which follow from the conditions that all the units are identical and all the ties between them are rigid) the Lagrangian Theorem requirements (1) are satisfied.

Real units 24 and 25 have elongated cores 7a,7b extended along the whole trajectory and permanent magnets 32-35 extended along the whole vehicle 15. Therefore, a real subsystem comprising both bottom (supporting) units 24 and side (stabilizing) units 25, is equivalent to considered above composed subsystem with two subsystems drawn apart along Axis **0X**, which shown in Figs. 4 and 5. Accordingly, in order to reach the necessary stability of the whole MDLSS, it is sufficient to connect rigidly two real subsystems drawn apart along Axis **0Y** by the distance $L_w \gg L$. The rigid tie is expedient to be fixed after the magnets of the supporting units 24 have settled down affected by the weight of the loaded vehicle before its start. In this case, the stabilizing magnets in the units 25 will not be deviated towards the bottom core in the unit 25 and, thus, will not create the destabilizing force which, otherwise, should be compensated by the supporting magnets in the units 24.

In order to construct a unit with the above properties let us consider the mechanism for creating the stabilizing and destabilizing forces $F_s$ and $F_d$ that affect its magnets.

As disclosed above, the tips 13 of the cores 7a,7b have the sharpened ends 29. The following discussion explains the mechanism for increasing the stabilizing forces and decreasing the destabilizing forces by sharpening the ends 29 of the tips 13.

Any force

$$f \; = \; f_n n^0 \; + \; f_t t^0$$

acting per unit of even surface **S** of the steel core 7a,7b in the magnetic field is determined by the formula:

$$f \; = \; n^0(1-1/\mu_f^{\,2})B_n^{\,2}/(2\mu_0) \; + \; t^0(1-1/\mu_f)B_n H_t \tag{3}$$

where $n^0$ and $t^0$ are respectively the unitary vectors of the normal and the tangent to the surface **S**; $B_n$ and $H_t$ are respectively the normal magnetic flux density and tangential magnetic intensity on **S** from the outside.

If the steel is unsaturated, then $\mu_f \approx \infty$ and $H_t \approx 0$. In this case $f_t = 0$ and

$$f(Q) \; = \; n^0 B_n^{\,2}/(2\mu_0) \tag{4}$$

If the steel is saturated then $\infty > \mu_f > 1$ and $f_t$ may be commensurable with $f_n$.

It follows from (4), that the magnetic force acting on the lateral surface **S** of the unsaturated unit cores is expressed by the formula:

$$F = j\ F_d - k\ F_s = j\ F_y + k\ F_z =$$
$$= 0.5/\mu_0[j\int B_n^2(Q)\cos(j,n_Q^0)dS_Q + k\int B_n^2(Q)\cos(k,n_Q^0)dS_Q] \qquad (5)$$

According to Newton's Third Law a force of the same value but of opposite direction acts on the permanent magnets of the unit.

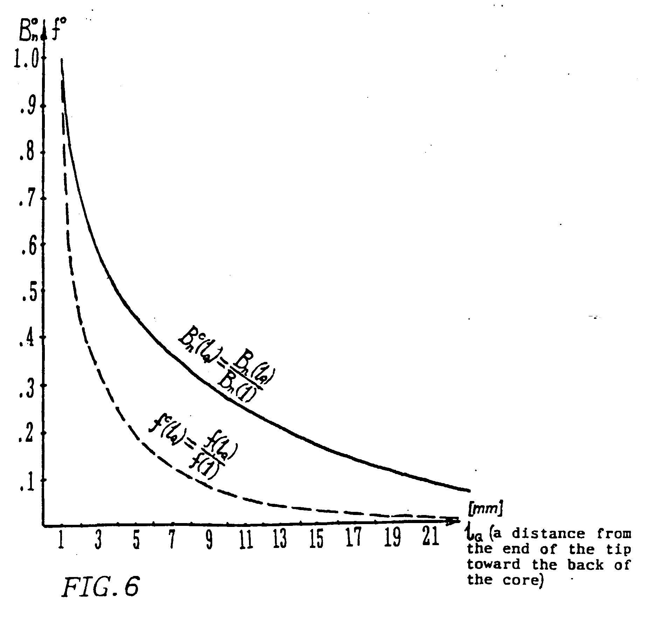

The magnetic field in the unit gap is plane-parallel. The distribution of the magnetic flux density $B_n(Q)$ over the surface of the tip 13, obtained by applying conformal mapping and best shown in Fig. 6, is such that as point **Q** moves away from the magnet pole, the magnetic flux density $B_n$ diminishes rapidly; the specific force **f** (which is proportional to the square of the density) diminishes even more rapidly. Hence, we may neglect the flux penetrating into the back12 of the core 7a, 7b and consider only force **F**, created by the flux penetrating into the thickened unsaturated tips.

Taking into account the symmetrical shape of the tips (with respect to the planes **Y = 0** and **Z = const**) and transforming the integral in expression (5), which applies the generalized mean value theorem, we obtain the following expressions for components of the force:

$$F_d = C_d\int [B_n(Q_R) - B_n(Q_L)]dS_Q = C_d(\Psi_{WR} - \Psi_{WL}), \qquad (6)$$

$$F_s = C_{SR}\int [B_n(Q_R^b) - B_n(Q_R^t)]dS_Q + C_{SL}\int [B_n(Q_L^b) - B_n(Q_L^t)]dS_Q =$$
$$= C_{SR}(\Psi_R^b - \Psi_R^t) + C_{SL}(\Psi_L^b - \Psi_L^t) = C_S[(\Psi_R^b + \Psi_L^b) - (\Psi_R^t + \Psi_L^t)], \qquad (7)$$

$$\text{where} \quad C_d = 0.5[B_n(Q_R) + B_n(Q_L)]\cos(j,n_Q^0)/\mu_0,$$

$$C_{SR} = 0.5[B_n(Q_R^b) + B_n(Q_R^t)]\cos(k,n_Q^0)/\mu_0,$$

$$C_{SL} = 0.5[B_n(Q_L^b) + B_n(Q_L^t)]\cos(k,n_Q^0)/\mu_0, \quad (Q,Q_R^b,Q_R^t,Q_L^b,Q_L^t \in S),$$

In the vicinity of $\delta$ (the magnets' equilibrium) the factors

$$C_{SR} = C_{SL},$$

consequently,

$$C_S = 0.5(C_{SR} + C_{SL}).$$

In the above expressions $\Psi_{WR}$ and $\Psi_{WL}$ are the working fluxes penetrating into the cores 7a, 7b through the surfaces of the right side (**R**) and left side (**L**) tips 13. $\Psi_R^b$, $\Psi_R^t$, $\Psi_L^b$, $\Psi_L^t$ are the parts of the same working fluxes ($\Psi_{WR}$ and $\Psi_{WL}$), penetrating through bottom (**b**) and top (**t**) parts of the tip surfaces.

One can see from formula (6) and (7) that force $F_d$ is proportional to the difference between the working fluxes multiplied by half the sum of the magnetic flux densities $B_n(Q_R)$ and $B_n(Q_L)$ in some point Q belonging to the tip surface. This difference appears with the deviation $\Delta y$ of the magnets because of the disbalance between the reluctances of the right and left hand parts of the air gaps. In the right hand part of (7) we can see two sums of the parts of the same working fluxes:

$$\Psi^b = \Psi_{WR}^b + \Psi_{WL}^b \quad \text{and} \quad \Psi^t = \Psi_{WR}^t + \Psi_{WL}^t$$

penetrating into the tips from the bottom and top respectively. The force $F_s$ in (7) is proportional to the difference between these sums caused by the vertical deviation $\Delta z$ following the redistribution of the conductances of upper and lower parts of the air gaps.

We will notice, that the difference of the sums of the working fluxes included in formula (7) does not change in value with the horizontal deviation $\Delta y$ of the magnets towards one of the cores, just as the difference of the working fluxes ($\Psi_{WR} - \Psi_{WL}$) in the formula (6) does not change with the vertical deviation $\Delta z$ of the magnets.

Analyzing expressions (6) and (7) and formulas for $C_d$, $C_{sR}$, $C_{sL}$ one can come to conclusion that sharpening the edges of the core tips at some angle $\beta$, as best shown in Figs. 2A and 2C, it is possible to obtain the bigger ratio of forces $F_s/F_d$ and their stiffness, than for core tips of rectangular shape. The optimum angle is close to 90°.

Summarizing and simplifying the above discussion, and referring to Fig. 2C, it is clear that the difference between the magnetic fluxes penetrating into the core 7a, 7b through the surface of the tips 13 causes the destabilizing force $F_d$ to arise, while the difference between sums of the parts of the same fluxes penetrating into the core 7a, 7b through the bottom and through the top halves of the surfaces of the tips 13, cause the stabilizing force $F_s$ to arise, and the stabilizing force is proportional to the difference between the fluxes penetrating through the bottom and through the top halves of the surfaces of the tips 13. Accordingly, since the magnetic flux penetrates into the tip 13 in the direction normal to the surface of the tip 13, by sharpening the front surface of the tips 13, it is possible to decreasethe horizontal components and to increase the vertical component of the magnetic flux penetrating through the surface of the tips 13, thereby diminishing the destabilizing forces and increasing the stabilizing forces in the units as the result of the deviation from the equilibrium.

Again referring to Fig. 2C, when displacing the magnet 34 downwards, the magnetic flux penetrating through the bottom surface of the tip 13 increases, while the magnetic flux penetrating through the top surface of the tip 13 decreases, thereby increasing the difference therebetween, and thereby substantially increasing the levitating stabilizing force Fs.

As discussed above, the destabilizing forces are decreased by using non-linear properties of the steel in the cores 7a,7b. The following discussion explains this feature.

As it is known to those skilled in the art, the assertion in S. Earnshaw's and w. Braunbek's theorems that charged, electrified, or magnetized bodies cannot achieve stable equilibrium in electrostatic or magnetic fields are based on the linear properties of the medium (air or vacuum with $\mu_0 = \text{const}$, $\varepsilon_0 = \text{const}$), where an attempt is made to suspend a heavy body with the help of electrostatic or magnetic forces. When $\mu = \mu_0$, the magnetic potentials $\varphi_m$ and $A_m$ satisfy the Laplace's differential equation followed directly by the conclusion that the local extreme of the electrical and magnetic potentials does not exist in the domain occupied by the field. In the year 1839 S. Earnshaw, and then, 100 years later, W. Braunbek proved the impossibility of local minimum of potential energy in a system of separate electrified, or magnetized particles in electrostatic or magnetic fields. Numerous (but unsuccessful) attempts to create systems of rigidly bounded magnets able to float in a stable fashion in their own magnetic field led researchers to draw incorrect conclusions from the above theorems with regard to the potential energy of the mentioned system. The analysis of the energetic surface peculiarities of the MDLSS system given above completely demonstrates that a local extreme can be created in such systems.

As it was discussed above, in order to create the MDLSS it is necessary to provide a strict local minimum of potential energy along the trajectory of the vehicle 15 movement. In addition to creating rigid ties between the units which provide the local extreme of potential energy of the system at the point of levitator equilibrium (as discussed above), it can be also attained by utilizing the nonlinear properties of the medium $\mu = \mu(B)$ inside the stator assembly 26 of the units 24,25, for reducing the destabilizing force and thus transforming the extreme into a minimum of potential energy; in this case it is necessary to apply electromagnetic screens 8-11 in the magnetic circuit 36 to lower the dissipation fluxes and retain a considerable portion of the magnetic field in the saturated steel cores 7a, 7b.

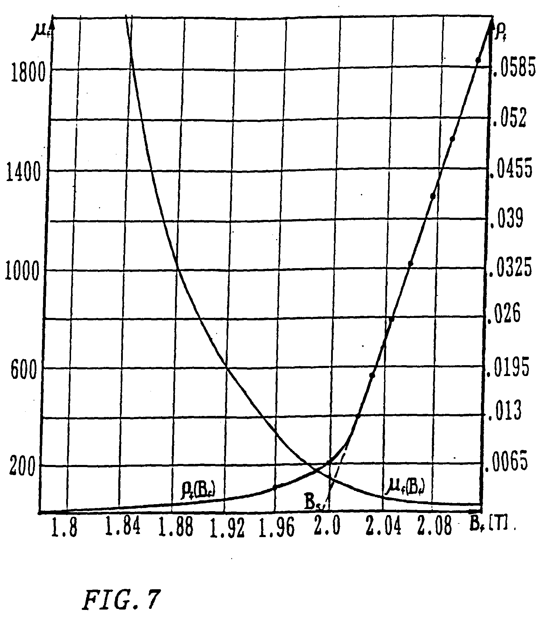

The expression for destabilizing force (6) is rather simple. It suggests a way to suppress the destabilizing force $F_d$ and its stiffness $\partial F_d/\partial y$ by employing the nonlinear magnetic characteristic B(H) of the core steel. It is known that the core's magnetic reluctance grows rapidly as the magnetic flux increases. Having the magnetization curve $B_f(H)$, it is easy to reconstruct the function $\rho_f(B_f)$, where $\rho_f$ is the relatively unitary magnetic reluctance of the core steel. As best shown in Fig.7, illustrating the function $\rho_f(B_f)$ for M-5 grain-oriented electrical steel (with thickness = 0.012"), if $B_f$ $\$\$ge\%\%2.02T$, then the curve $\rho_f(B_f)$ contains a linear fragment with a large incline to the Axis $B_f$ described by the following equation:

$$\rho_f(B_f) \;=\; (B_f - B_s)/N \qquad\qquad (8)$$

where $B_s = 1.996\ T$ , $N = 1.916$.

The fast growth of $\rho_f(B_f)$ and its linear relation of $B_f$ when $B_f \geq 1.01\,B_s$ are inherent in all magneto-soft steels. As a consequence of this characteristic the magnetic density $B_f$ in the cross section of the saturated steel cores is levelled:

$$B_f \;=\; \Psi_v/t_s.$$

Therefore, the magnetic reluctance $r_f$ of the saturated core ($B_f > 1.01\,B_s$) with the length $l_s$ and thickness $t_s$ is equal to:

$$\mu_0 R_f(B_f) \;=\; r_f(B_f) \;=\; \rho_f(B_f)l_s/t_s \;=\; l_s(B_f - B_s)/(Nt_s) \;=\; b(B_f - B_s) \qquad (9)$$

where

$$b \;=\; l_s/(Nt_s)$$

and $R_f$ is an absolute magnetic reluctance of the core 7a, 7b.

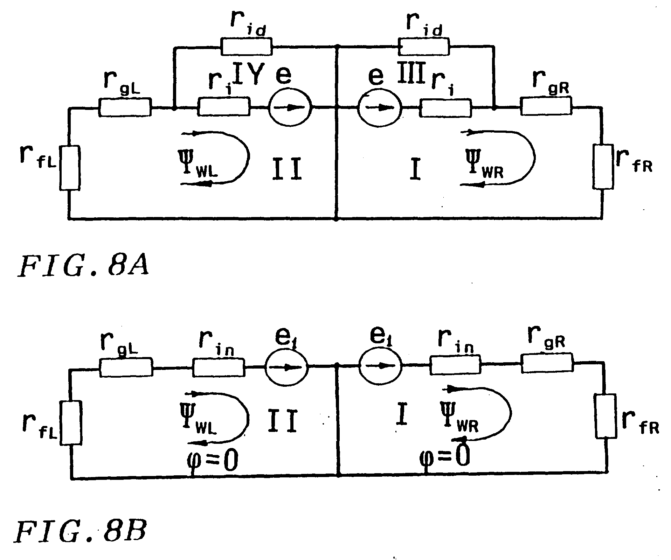

To facilitate the understanding, the assembled unit 24,25 including the permanent magnets 32-35 and cores 7, 7a is best shown in Figs. 8A and 8B, in the form of a closed magnetic circuit containing the following sources of magneto-motive force (mmf):

-

$$e \;=\; WH_c\mu_0$$

($H_c = 8.9 \cdot 10^5$ A/m) with the internal magnetic reluctance

$$r_i = W/(2\mu_r h),$$

($\mu_r = 1.07$),

- four air gaps of total length 4g with magnetic reluctances: $r_{gR}$ (at the right side) and $r_{gL}$ (at the left side),
- two "C"-shaped steel cores 7,7a with magnetic reluctances: $r_{fR}$ (at the right side) and $r_{fL}$ (at the left side) when the core backs 12 are saturated.

All magnets 32-35 in the unit 24, 25 (with dimensions 2h x W) contain the steel insertion strip 5 between them. This strip 5 serves to connect all the magnets with each other. In addition, it reduces the interactions between the working fluxes in the right-side and left-side cores 7 and 7a. The sources of mmf create the working fluxes in the circuit: $\Psi_{WR}$ and $\Psi_{WL}$, forming a closed contour in the cores, and the dissipation fluxes: $\Psi_{id}$ and $\Psi_{fd}$, forming a closed contour through the environment. $\Psi_{id}$ represents the fluxes closing at the top and bottom of each magnet through the reluctance $r_{id}$. The $\Psi_{fd}$ represents the fluxes which branch out from the working fluxes through the internal and external lateral surfaces 30 and 31of the backs 12 when they are saturated. The dissipation fluxes reduce the stability of the MDLSS. To suppress or decrease them, the conductive screens 8-11 are utilized.

When the unit 24,25 is in the equilibrium, then the working fluxes are equal to each other and then $F_s = 0$ and $F_d = 0$. With the small deviation $\Delta y \ll g$ of the magnets , the gaps $g_R$ and $g_L$ between the magnet poles and core tips will change. This leads to changing their magnetic reluctances $r_{gR}$ and $r_{gL}$; the right side gap reluctance will reduce to some value

$$r_{gR} = r_g - \Delta r_g \, ,$$

but the left side one will increase to some value

$$r_{gL} = r_g + \Delta r_g,$$

where

$$\Delta r_g = \Delta y / 2h.$$

Then, the equality between the fluxes will be broken, and the resulting difference is the source of the force $F_d$.

Nevertheless, if the magnets are in equilibrium and the unit's cores have been saturated, then an increase in the flux $\Psi_{WR}$ (caused by the reduction of reluctance $r_{gR}$) will engender an increase in the magnetic reluctance $r_{fR}$ of the core by the value $\Delta r_{fr}$, and, vice versa, a decreasing in the flux $\Psi_{WL}$ (caused by the growth of the reluctance $r_{gl}$) will lessen the reluctance $r_{fL}$ by the value $\Delta r_{fL}$. Thus, in the unit with the saturated cores 7a,7b, the horizontal deviation of the magnets, $\Delta y$ alters the reluctances of the right side loop:

$$r_{mR} = (r_g - \Delta r_g) + (r_f + \Delta r_f)$$

and the left side loop:

$$r_{mL} = (r_g + \Delta r_g) + (r_f - \Delta r_f)$$

of the circuit by the value:

$$r_{mL} - r_{mR} = 2(\Delta r_g - \Delta r_f)$$

that is less than would cause the same deviation if the core were unsaturated, i.e.,

$$r_{gL} - r_{gR} = 2\Delta r_g > 2(\Delta r_g - \Delta r_f).$$

It follows, that the difference of the working fluxes and the destabilizing force

$$F_d = C_d (\Psi_{WR} - \Psi_{WL})$$

caused by this difference, in the unit can be reduced utilizing core steel saturation.

Mechanical and electromagnetic processes in the MDLSS are interrelated and develop depending on the velocity $V_x$ of the levitator movement and its deviations $\Delta y$ and $\Delta z$ from the assigned trajectory. When the vehicle 15 is immovable, its stability is provided by wheels. When accelerating the vehicle to some speed $V_0$, the destabilizing force it reduced, and the vehicle 15 is stable.

In order to use the non-linearity of the stator core steel for lowering the destabilizing force $F_d$, it is necessary to raise the magnetic density of the working fluxes $\Psi_W$ the core backs along all their length $l_s$ up to the value $B_f > B_s$

that makes all cores working at the linear part $\rho(B_f)$ of the magnetization curve (best shown in Fig.7). To achieve this, it is necessary to suppress the dissipation fluxes $\Psi_{fd}$ emanating from the lateral surfaces of the saturated core backs. The magnetic permeability of the air $\mu_0$ is as much as five orders higher than its electrical permeability

$$( \mu_0 > 1.4 \cdot 10^5 \varepsilon_0 ).$$

Therefore, when a core back is saturated, a considerable portion of the magnetic lines of force of the flux $\Psi_w$ (up to 20%) forms a closed contour through the air. Then, the flux density in the core back 12 diminishes, the magnetic reluctance drops and no longer compensates the changing of the air gaps reluctances at the side shifts $\Delta y$ of the magnets 32-35.

In order to prevent decreasing the flux density in the core backs 12, the magnets 32-35 are connected with each other in such a manner that their polarity alternates along the trajectory of the movement , parallel to the axis 0X, as best shown in Figs. 1C and 2B. Moreover, the core backs 12 are covered with the conductive screens 8-11 made of copper and aluminum with the thickness about 0.02m. During the vehicle movement with the speed V =150m/s along the trajectory, the magnetic fluxes in the cores 7a, 7b are alternating in value and direction. If, as shown in Fig. 2B, the length of each magnet $l_x$ is equal to 1.45M and space $d_x$ between the adjacent magnets - 0.05 M, then the wave length $\lambda$ of the traveling magnetic field in the air gap is equal to:

$$\lambda = 2(l_x$$

$$+ d_x) = 3.0 \ M$$

and the frequency $f$ of oscillation of the magnetic flux in the cores 7a, 7b is

$$f = V/\lambda = 50Hz \ .$$

The alternative magnetic dissipation fluxes $\Psi_{fd}$ penetrating into the above screens 8-11 induce eddy currents in them that, in its turn, create a counter magnetic field tending to suppress fluctuations of the dissipation fluxes. For example, the two-layer screens with the thickness 2cm shown in Fig.2A reduce the value of normal flux density $\underline{B}_{nfd}$ on the core back surfaces 30 and 31 as much as by 50 times, thus, almost totally isolating the cores 7a, 7b from the environment. When lowering the speed of the vehicle 15 down to V=50m/s, $\Psi_{fd}$ will reduce approximately by 30 times.

To find the working flux values and values of forces $F_s$ and $F_d$, we have to calculate the unit's magnetic circuit, shown in Figs. 8A and 8B.. Taking into account that each unit is symmetrical with respect to horizontal plane z = const, where the magnetic potential turns into zero, the equivalent scheme can be simplified by eliminating its lower portion. The complete equivalent scheme of the upper part (containing four loops) is shown on Fig.8A. By substituting the loops III and IY with equivalent generators with the parameters:

$$e_1 = e/(1 + r_i/r_{id}) \qquad\qquad r_{in} = r_i/(1 + r_i/r_{id}) \qquad\qquad (10)$$

we simply reduce it to the two-loop equivalent scheme shown in Fig.8B. The thickness of the iron insertion strip 5 ($t_d$) is determined in such a way as to prevent saturation, regardless of the shift of the magnets $\Delta y < g$. Its magnetic reluctance $r_d = 0$ at any mode of the unit operation, the loops of the equivalent scheme will split, and we can calculate each loop separately, following Ohm's Law. The calculation is carried out under the assumption that the levitator travels with some speed ($V_0$ or more) with the conductive screen completely suppressing fluxes $\Psi_{fd}$, that is, we assume $r_{fd} \approx \infty$.

The working fluxes in the cores are determined as:

$$\Psi_{wR} = e_1/[(r - \Delta r_g) + r_{fR}(B_f)]; \qquad \Psi_{wL} = e_1/[(r + \Delta r_g) + r_{fL}(B_f)] \qquad (11)$$

where

$$r = r_{in} + r_f$$

If the cores are unsaturated then

$$r_{fR} = r_{fL} = 0,$$

and the internal working fluxes are:

$$\Psi_{WR}^0 = e_1/(r - \Delta r_g); \qquad \Psi_{WL}^0 = e_1/(r + \Delta r_g) \qquad (12)$$

At the equilibrium of magnets (when $\Delta r_g = 0$):

$$\Psi_{WR} = \Psi_{WL} = \Psi_W = e_1/(r + r_f(B_f)); \qquad \Psi_{WR}^0 = \Psi_{WL}^0 = \Psi_W^0 = e_1/r \qquad (13)$$

To exploit effectively core steel saturation to raise levitator stability it is necessary to insure the following proportionalities between the dimensions of magnets and cores (**W, h, $l_s$, $t_s$, g**) and also to choose steels with appropriate characteristics (**N, $B_s$**) whereby:

1. the magnetic flux density $B_f$ in the core backs would change within the linear part of the curve $\rho_f(B_f)$ (Fig.7 ) at the deviation $\Delta y_m < g$ ,
2. the saturation of the core backs would not lower the magnetic flux density $B_n$ in the core tips and the working fluxes in the cores more than by

$$\Psi_W^0/\Psi_W = \epsilon$$

times ($\epsilon \le 1.15$), that is equivalent to the restriction from the $B_f$ top.

The conditions 1 and 2 are satisfied if at the given $\epsilon$ and core back length $l_s$ its thickness $t_s$ satisfies the formula:

$$t_s = e_1/\{r[B_s\epsilon + e_1 N(\epsilon - 1)/(B_s l_s)]\} \qquad (14)$$

Substituting the expression (9) into (11) we obtain the square equations with respect to the working fluxes $\Psi_{WR}$ and $\Psi_{WL}$ that run in the cores. Solving the equations we find:

$$\Psi_{WL,R} = 0.5 t_s[B_s - (r \pm \Delta r_g) N t_s/l_s]\{1 + \sqrt{[1 + 4e_1 N/(l_s[B_s - (r \pm \Delta r_g) N t_s/l_s]^2)]}\} \qquad (15)$$

The saturation of the backs changes the tip' potentials and reduces the value of the density $B_n$ . In this case, the factors $C_s$ and $C_d$ (6,7) and also the working fluxes (15) decrease by $\epsilon$ times. At the same time, the core back saturation reduces the difference between the working fluxes by $\zeta$ times, where

$$\zeta = \Delta \Psi_W^0/\Delta \Psi_W = (\Psi_{WR}^0 - \Psi_{WL}^0)/(\Psi_{WR} - \Psi_{WL}) \qquad (16)$$

For the unit shown in Fig.2A

$$\zeta = 10.3 \approx 9\epsilon$$

with the given value of $\epsilon = 1.15$.

We will give now an example of calculation of the magnetic circuit of the unit.

The initial data:

W=0.03m, 2h=0.025m, g=0.005m, $l_s$=0.06m, $H_c$=8.9 · $10^5$ A/m, $B_s$=1.996T, N=1.916, $\mu_r$=1.07, $r_g$=0.3, $\Delta r_g$=0.05, $\epsilon$=1.1, V=150 m/s

Calculated values of the equivalent scheme parameters:

$$r_i=1.12, \quad r_{id}=1.53, \quad r_{in}=0.647, \quad r_{gR}=0.25, \quad r_{gL}=0.35$$

$$e=\mu_0 W H_c=3.355\cdot 10^{-2}, \quad e_1=1.936\cdot 10^{-2}, \quad t_s=9.1823\cdot 10^{-3}, \quad \Delta y=2.5mm,$$

$$\Psi_{WR}=1.87\cdot 10^{-2} Wb, \quad \Psi_{WL}=1.8466\cdot 10^{-2} Wb, \quad \Delta\Psi_W^0=1.0821\cdot 10^{-3} Wb,$$

$$\Delta\Psi_W=1.16966\cdot 10^{-4} Wb, \quad \zeta=9.25, \quad B_{fR}=2.03652T, \quad B_{fL}=2.011044T$$

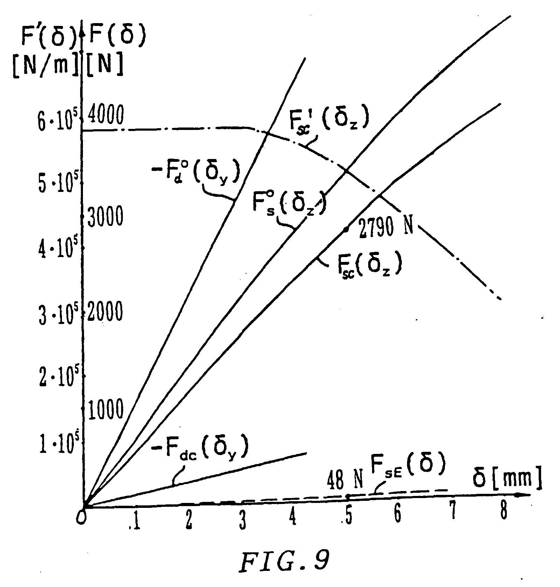

To evaluate the forces acting in the MDLSS we used the results of measuring the forces in the real model of the unit with unsaturated cores (with the length $l_x$=0.06m). These results are represented in Fig.9, where stabilizing and destabilizing forces are shown as functions of shifts: $F_s^0(\delta_z)$ and $F_d^0(\delta_y)$. The same forces

$$F_{sc}(\delta_z)=F_s^0(\delta_z)/\epsilon^2 \text{ and } F_{dc}(\delta_y)=F_d^0(\delta_y)/\epsilon\zeta$$

and stiffness of the stabilizing force

$$F'_{sc}(\delta_z)=\partial F_{sc}(\delta_z)/\partial z$$

were recalculated considering saturation of the core backs and also shown there. The ordinates of all the graphs are scaled with respect to the length of the magnets $l_x$=1m. Consequently, if the length of the magnets equals to the length of a vehicle $L_v$=20M and the MDLSS comprises four supporting and two stabilizing units (rigidly connected with the levitator after the vehicle having settled down by the shift $\Delta z$=5mm) then the vehicle with its weight $F_v$=22 tons (that is 220,000N) floats stabily. In this case, a lateral force $F_{lat}$=5tons could move the vehicle aside no more than by $\Delta y$=2.3mm.

Approximate calculations have shown that protruding arms 8a and 9a (Fig. 2A) of the aluminum screens suppress dissipation fluxes and thus increase the working core fluxes and the stabilizing force.

To calculate the magnetic circuit of the unit with sufficient accuracy it is necessary to determine values of reluctance to the dissipation fluxes $\Psi_{id}$ and $\Psi_{fd}$. The reluctances can be expressed in terms of potentials and fluxes:

$$r_{id}= \varphi_p/\Psi_{id} \qquad\qquad r_{fd}= \Delta\varphi/\Psi_{fd}$$

where $\Delta\varphi_p$ is the magnetic potential on the magnet pole;

$\Delta\_$ is the magnetic potential drop along the length $l_s$ of the saturated core back.

In as much as all components of the unit are cylindrical in shape, the unit's magnetic field is plane-parallel. This allows to find analytical solution for the fluxes and reluctances $r_{id}$ and $r_{fd}$ applying the Poisson's Integral for the upper semi-plane. For above example, in the unit shown in Fig.2A $r_{id}$=1.53. With the shift $\Delta y$=2.5mm of the magnets the values of the magnetic flux density in the core backs are: $B_{fR}$=2.03652T, $B_{fL}$=2.011044T. Then, the dissipation fluxes are:

$$\Psi_{fdR}=2.375\cdot10^{-3}Wb=12.7\%\Psi_{uR}, \qquad \Psi_{fdL}=0.8707\cdot10^{-3}Wb=4.7\%\Psi_{uL}$$

The calculation of the conductive screens was also made analytically. We obtained an exact solution of the problem of flat sinusoidal electromagnetic wave propagation in the three-layer conducting medium. Then, the real electromagnetic wave (created by the moving magnets of the levitator) was expanded into Forier series where its first eleven harmonics were considered. Further, the analytical expressions for the distribution of potentials and electromagnetic field intensities close to the lateral surface of the stator in front and behind the conducting screens were obtained. Thus, knowing the field distribution, it was possible to calculate certain essential magnitudes:

$k_{sup}$ - the coefficient for suppressing dissipation fluxes (coming from the cores) by eddy currents induced in the screen:

$$k_{sup}=B_m(Q_1)/B_{mscr}(Q_1),$$

where $B_m(Q_l)$ is an amplitude of the magnetic flux density in the point $Q_l$, belonged to the core back surface with no conductive screen, $B_{mscr}(Q_l)$ is an amplitude of the magnetic flux density in the same point in the presence of the ic] conductive screen;

$k_{scr}$ - the coefficient for screening the flux (behind the screen):

$$k_{scr}=B_m(Q_2)/B_{mscr}(Q_2),$$

where $B_m(Q_2)$ is an amplitude of the magnetic flux density in the point $Q_2$, disposed behind the screen surface in its absence, $B_{mscr}(Q_2)$ is an amplitude of the magnetic flux density in the same point in the presence of the screen. For aluminum screen with the thickness 0.02m at the levitator's speed $V=180m/s$ and $\lambda=3m$ $k_{sup}=$ 46,2 and $k_{scr}=162.0$;

$p$ - the total losses of energy in the screens of the vehicle. With the shift $\Delta y=2.5mm$ of the magnets $p=54\cdot10^3$ W;

$F_x$ - the force impeding levitator magnets movement appearing due to losses of energy in the screen. $F_x=300N$ for the whole vehicle;

$F_y$ - the force repelling the moving magnet from the flat screen.

To compare the forces in Electrodynamic Suspension system and proposed [1]Magnetodynamic Suspension systems, the graph of the stabilizing force as function of shift $\delta$:

$$F_{st}(\delta)= F_y(g-\delta)-F_y(g+\delta)$$

(with g=0.05m) for EDS is also shown in Fig.9 by dotted line.

Accordingly, it will be appreciated by those skilled in the art that within the scope of the appended claims, the invention may be practiced other that has been specifically described herein, as long as the following unique features of the present invention are employed which reduce the destabilizing forces and increase stabilizing forces created in the MDLSS:

1. stabilizing and supporting units with reciprocally perpendicular vectors of magnetization;.
2. rigid ties between the magnet assemblies in the MDLSS;
3. non-linear characteristics of the steel in the cores, saturated back and unsaturated tips;
4. conductive screens covering lateral surfaces of the back of each core and suppressing the dissipation magnetic fluxes;
5. sharpened ends of the tips;

6. the width of the tips larger than the width of the back in each core.

The second subsystem -PMLSM comprises a linear guideway/stator assembly (stationary part) and permanent magnet rotor assembly (moving part). As seen in Fig.1, the linear synchronous motor of the present invention includes:

a) the propulsion winding **42,43** extended along the trajectory of the vehicle motion;

b) the permanent magnet rotor **44,** which is fixed to the vehicle chassis **45** and has magnetic units **46** changing its pole pitches;

c) a synchronising device **47** for stepped changing rotor pole pitches (simultaneously with changing the turn length of the stator winding during the vehicle motion) by switching on/off the corresponding units;

d) a synchronizing mechanism **48** for smooth variation of rotor pole pitches (simultaneously with changing the turn length of the stator winding during the vehicle motion) by drawing apart or together the magnetic units belonging to the rotor front and back halves.

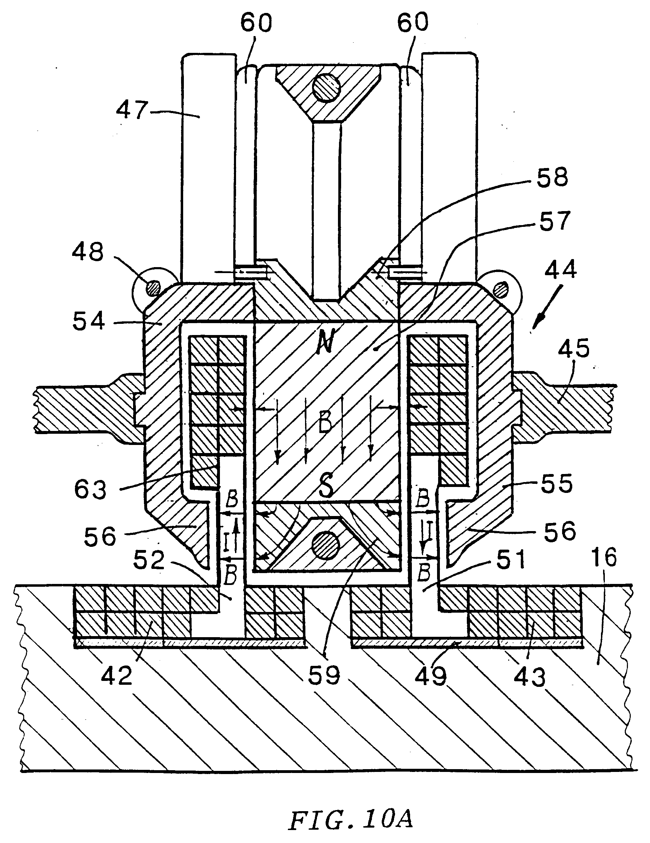

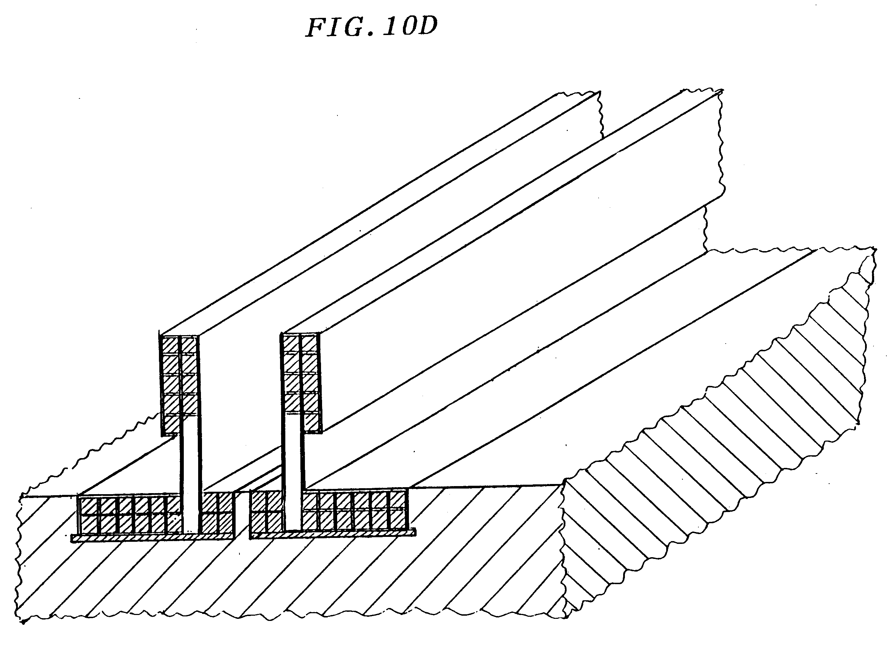

The guideway/stator as shown in Figs 10A-10D has common concrete beams **16** with two toothed holders **49** and two three-phase conductive windings **42,43** which extend along the guideway. As seen in Figs.10A and 10D the stator is formed from two mirror-symmetrical parts. Each part includes one toothed holder **49** having a "T"-shaped cross-section. Holder **49** is attached to beam **16** and supports the conductors **50** of the three-phase windings **42** and **43** respectively. When the three-phase stator winding **42, 43** is coupled to an electric generator, then (due to the time lag of the phase currents on 1/3 of the period and displacement of the conductors of adjacent phases on 2/3 of their turn length $L_t$ along the stator) the winding generates a wave of current traveling along the stator.

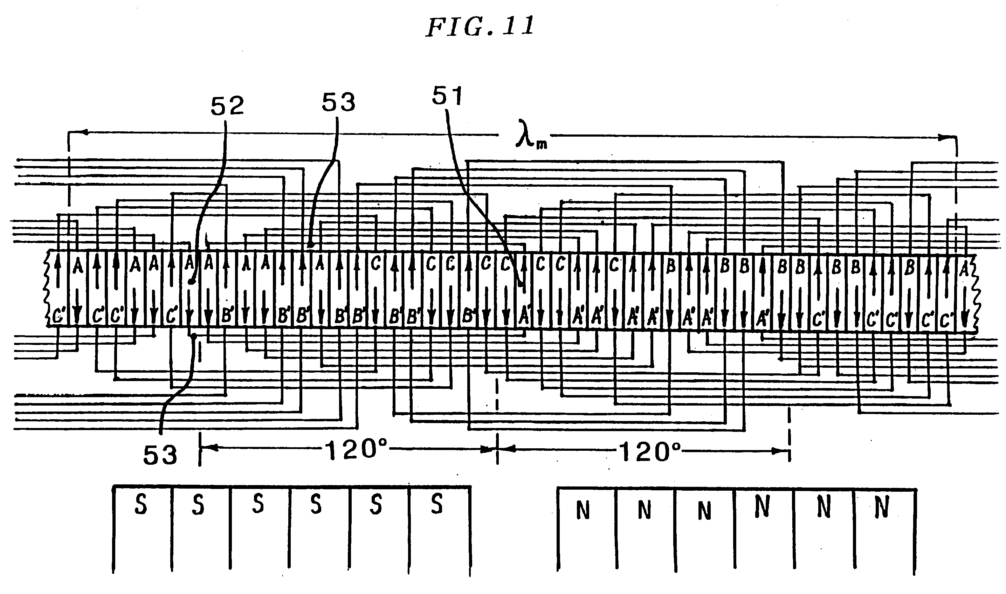

The traveling current wave may have a permanent amplitude if the conductors of the three-phase winding are thin and placed with three layers (one phase per layer) which are shifted one with respect to another by $2/3L_t$. Then, the density of the phase winding turns (i.e., the number of winding turns of the phase per unit of the stator length) alternates sinusoidally along the stator with the distance **x**. In our case the winding conductors are thick and all three phases must be placed with one layer in the slots of the tooth holder. Therefore, in order to reduce the vibration of the current wave amplitude the working segments of the different winding phases must interchange in the order shown in Fig.11, where letters A',B',C' indicate front segments of turns belonging to three phases, and A,B,C indicate back segments of the phase turns. Each of the phases A,B,C of the stator winding comprises $2\nu$ turns buses which are placed into the holder slots in some sequence, for example, when $\nu = 4$ the sequence is as follows: A.C'.C'.A.A.C'.A.A.B'.A.A.B'.B'.A.B'.B'.C.B'.B'.C.C.B.C.C.A'.C.C and so on where letters A'.B'.C'. indicate front segments of the phase turns, as best shown in Fig.11.

Velocity **V** of the current traveling wave equals

$$V = 2L_t f$$

where **f** is the current frequency.

The conductors in the winding are copper buses. Each individual turn has front and back, which represent working segments **51** and **52**, and two side parts **53** connecting the working segments. The working segments (which contribute to the creation of Lorentz forces, and also counter electromotive forces) are fixed in the slots of the holder with a single layer. The side parts (upper and bottom ones) form the end-faces as a monolithic multilayer of conductors affixed to one another by an inner layer of electrical insulation **63**. The upper end-face is inserted into the hollow of the rotor, the bottom end-face is fixed to the concrete beam.

The stator winding has three types of distinct sections: an acceleration section, a constant velocity section, and a deceleration section.

In the acceleration section of the stator, the length of the turns smoothly increases in the direction of movement. As a consequence, the length $\lambda$ and velocity **V** of the traveling wave of the current along the acceleration section of the guideway/stator increases until velocity equals the desired speed $V_v$ of the vehicle. In contrast, in the deceleration section the lengths of the turns smoothly decreases in the direction of movement.

Since the length $\lambda$ of the traveling current wave in the stator winding equals double the length $L_t$ of the winding turn:

$$\lambda = 2L_t \; ,$$

and its velocity **V** equals the product its length and the current frequency **f**:

$$V = f\lambda$$

then, knowing the radius **R** of the curvature of the guideway turnings and permissible centrifugal force $F_c$ related to vehicle mass $m_v$ it is possible to calculate the length of the winding turn in any cross-section of the guideway by formula:

$$L_t = \sqrt{(F_c R / 4 f^2 m_v)}$$

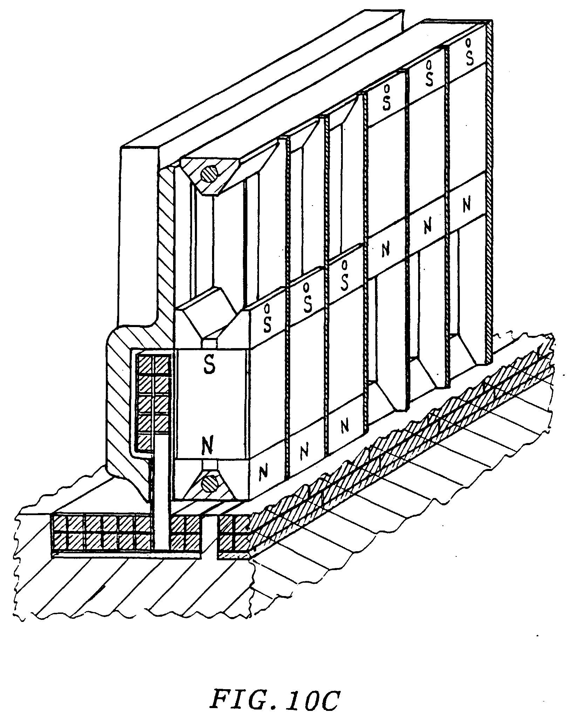

The rotor of the PMLSM comprises an even number of identical units (see Fig.10A,10C) installed on the vehicle chassis in a row along the vehicle. Each unit contains two steel cores **54,55** of cylindrical form and "C"-shaped cross-section with upper **60** and lower **56** core shoes placed opposite to each other and a permanent magnet **57** designed in form of a rectangular parallelepiped (with the height $h_m$ and width $w_m$) with steel pole shoes **58,59** rigidly attached to the magnet. The permanent magnet is inserted in the gap between core shoes **56, 60** and can be shifted in vertical direction with respect to the cores **54,55**. Polarities of the magnets belonging to the front half of the rotor are the same and opposite to those belonging to the back one. Cores belonging to each half of the rotor are rigidly coupled, however, and both halves can be smoothly draw apart and together along the car, thus changing the distance between the rotor poles during the vehicle motion.

The distance between the upper core shoes **60** equals the width $w_m$ of the magnet, while the distance between the bottom core shoes **56** is larger and equals to $w_m + 2g$. Therefore, when the magnet **57** is shifted upward its magnetic field is closed through the upper core shoes and the unit (which the magnet belongs to) is disengaged. When the permanent magnet is shifted downward the unit is engaged and then, together with its cores, the magnet creates a two-loop magnetic circuit containing two air gaps (distance **g**). In this case, the working segments of both parts of the winding are inserted into the air gaps of above circuit and, because of small size of the air gaps, the resulting magnetic flux density is of considerable value (about **1T**).

When the winding is attached to a constant frequency three-phase generator, the above mentioned current wave traveling in the conductors traverse the working gap of the magnetic units and generates the propulsion force **F** = $\Sigma$**BLI** (i.e., the summation of Lorentz forces) that carries the rotor and the vehicle.

At the same time the magnetic field within the working gap of the units crosses the winding conductors and induces the counter-electromotive force **E** = $\Sigma$**BLV** which accompanies the process of transforming the electromagnetic energy into the mechanical work necessary to propel the vehicle. As best shown in Figs.1A and 10A-10C the steel cores **54,55** and the permanent magnets **57** are installed on the vehicle.

The rotor cores **54,55** are rigidly connected with the vehicle chassis **45** and can be moved only in the direction of the vehicle motion (i.e., along the Axis 0X). In addition, the unit magnets are connected with the cores and can be moved only upward and downward with respect to the cores (i.e., along Axis 0Z) and cannot move between the steel cores **54,55** in the horizontal direction along the Axis OY perpendicular to the Axis OZ. Therefore, forces $F_y$ attracting the magnets to the cores are compensated by the reactions of the ties between the steel cores **54,55** and resoective permanent magnets **57**; that further means that there exists no destabilizing force displacing the vehicle in the horizontal direction along the Axis OY within the PMLSM of the present invention in contrast to known systems (for instance, disclosed in U.S. Patents ## 5,225,726 and 5,208,496) having the cores installed on the guideway.

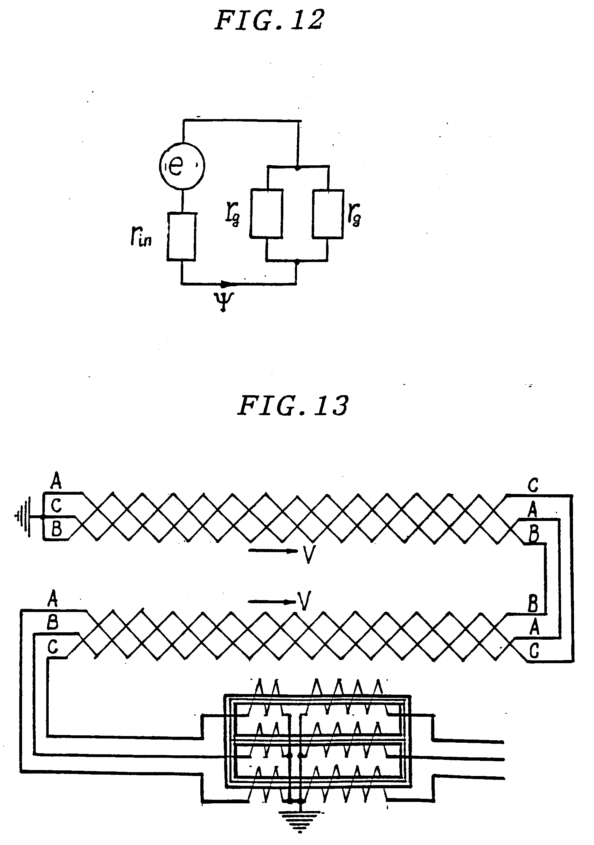

The equivalent scheme of the magnetic circuit is shown in Fig.12. The designations are as follows: $H_c$ is the coercive force of a magnet; $\mu_r$ is the relative magnetic permeability of the magnet; $h_g$ is the height of the bottom core shoe. Then, the magneto motive force $e_m$ is

$$e_m = \mu_0 H_c h_m,$$

the internal magnetic reluctance of the magnet body is

$$r_{in} = h_m / (\mu_r w_m),$$

the total magnetic reluctance of two air gaps is

$$r_g = g/(2h_g).$$

Consequently, following Ohm's law for a magnetic circuit, the total magnetic flux $2\Psi$ in the working gaps is

$$2\Psi = e_m/(r_{in}+r_g),$$

and the magnetic flux density in the working gap is

$$B = \Psi/h_g.$$

Accordingly, the maximal propulsion force of the unit is expressed by the following formula:

$$F_{propuls.} = 2Bh_g jS_b k,$$

where $j$ is the permissible (by heating) current density in the working segments of the stator winding; $S_b$ is the bus cross-section; $k$ is the number of the buses in the air gap of an individual unit.

An approximate evaluation of the permissible current density $j$ in the cross-section of the winding buses when heated showed that it must not exceed $j = 10^7$ A/m$^2$ during vehicle movement at speed $V_m = 180$ m/s along a guideway fragment of **300 m** (powered by one transformer) if the permissible temperature rise is $\Delta t^0 = 100°C$.

The dimensions and weight of the rotor of the PMLSM depend considerably on the dimensions of its cores which, in their turn, depend on the cross-section of the upper end-face of the stator winding in the following manner: the greater the square $S_w$ of the end-face, the greater the core dimensions. The propulsion force is created only by vertical (working) segments of the winding turns. Accordingly, it is not necessary to created closed winding turns. When the rotor is moving, the upper end-face of the stator winding must move freely without contact through the hollow of the rotor "C"-shaped core (Fig.10A). Accordingly, it is expedient to design the stator winding in such way as to make the square of its upper end-face as small as possible. This considerably reduces the weight of the core and, in addition, increase the durability of the winding, from which the vehicle repels.

To describe the winding construction we shall first consider the circuit powering the fragment of the stator where the vehicle is moving. The step-down transformer serves as a source of power for this fragment (Fig.13). Each phase coil of its secondary winding feeds the phase of both the right-hand and left-hand stator windings.

Magnetic lines in the left-hand and right-hand air gaps of the rotor are oriented contrarily. Therefore, to achieve summarizing Lorentz forces created by the left-hand and right-hand windings the currents in the left-hand and right-hand buses must flow in opposite directions. This means that at the end of this fragment (when the right-hand and left-hand windings are connected in series) it is necessary to change sequence of phases.

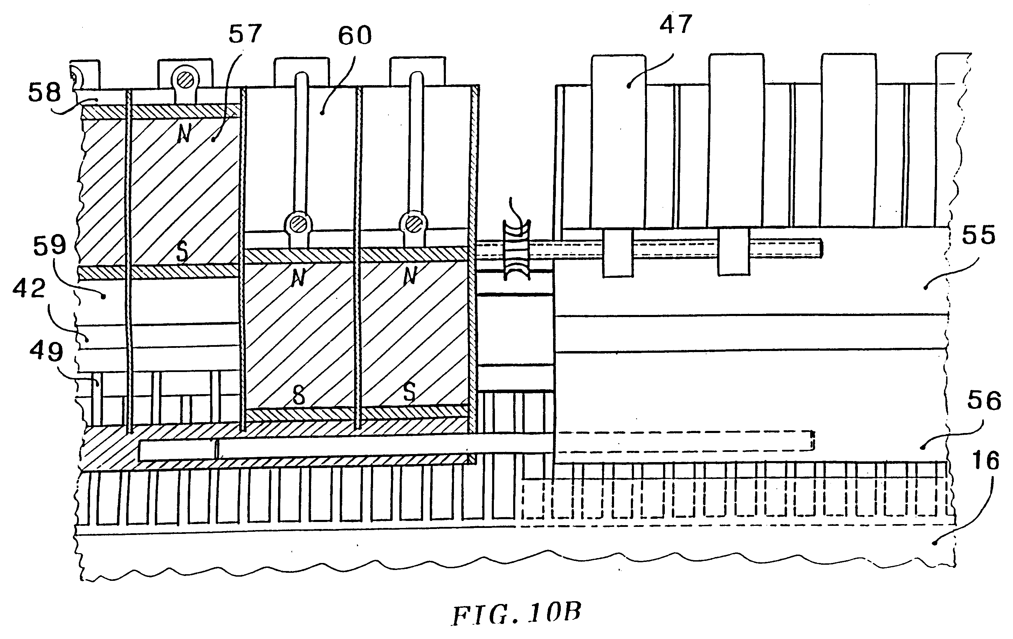

Each coil feeds buses slotted between teeth of a toothed holder. All buses of both right-hand and left-hand windings belonging to the same phase are placed respectively in the right-hand and left-hand toothed holder with a single layer (as shown in Fig.10B) forming the winding turns. In order to reduce the square of the upper end-face in the proposed PMLSM when assembling the windings every bus should be bent in such a way that $v$ of its turns were coiled clockwise and another $v$ turns were coiled counter-clockwise (on every fragment of the stator with the length equal to the length of the traveling wave). In this case, as one can see in Fig.3, the maximal size of the cross-section of the upper end-face is reduced to $2.5vS_{bm}$, thus reducing rotor weight.

Now we determine the number "$v$" and $S_w$ -- the value of the maximal cross-section of the upper end-face of the winding on a guideway section with maximal winding turn length $L_{tm}$, where the current traveling wave runs with the maximal velocity

$$V_m = f\lambda_m.$$

The cross-section of the buses on this section also must have maximal value, i.e.,

$$S_b = S_{bm}.$$

There are 12$\nu$ of the working segments of the winding with the total cross-section

$$S = 12 S_{bm} \nu,$$

which could fit in a rotor air gap. The following technological considerations require that the maximal cross-section of the bus $S_{bm}$ be of a square shape with the side

$$w_b = \sqrt{S_{bm}} = g - 2\delta,$$

where $\delta$ is a distance between the pole shoes (of the core and magnet) and the surface or the working segment in the air gap of the rotor (see Fig.10A). As far as durability is concerned, the thickness of the strengthening teeth of the toothed holder must be equal to half the bus thickness, i.e., $w_b/2$. Then, the total cross-section of the working segments layer in the rotor gap is determined by the formula:

$$S = 2/3 \cdot \lambda_m \sqrt{S_{bm}}.$$

Equating both formulas for S we will find the value of $\nu$ which is rounded number of the expression $\lambda_m/18/(g-2\delta)$.

Hence, we can obtain the desired value of the cross-section of the upper end-face winding determining dimensions of the rotor cores:

$$S_w = 2.5 \nu (g - 2\delta)^2$$

On the other guideway sections where the winding turn length $L_t$ is less than $L_{tm}$ is variable, the bus thickness (i.e., the size of the working segments along the stator) must be reduced proportionally to $l_t$ leaving the bus width

$$w_b$$

$$= \sqrt{S_{bm}}$$

invariable and equaled to $(g-2\delta)$.

The permissible current $I_p$ in the air gaps of PMLSM is:

$$I_p = 12 \nu j (g - 2\delta)^2$$

The maximal propulsion force of the linear motor as a whole is:

$$F_{prop.m} \leq 2Bh_g I_p q$$

where q is coefficient considering the shift of the rotor poles and non-sinusoidal distribution of the winding turns of the phase winding.

The scheme of the complete left-side winding (with $\nu = 4$) is shown in Fig.11.

When the vehicle begins to depart the station it employs wheels rotated by the direct current motors, which are supplied with power from constant voltage busbars located on the concrete beam of the guideway. In these sections the winding turn length of the stator is constant and equals unit length $L_R$. The section winding gets power from a three-phase alternative current power system. To limit current in the winding a supplemental resistor as provided, connected with the winding in series. This resistor can be shunted if needed. The rotor of the PMLSM must have minimal pole pitch

$$L_p = L_R$$

when accelerating, which means that only two central units are under operation.

Before entering the acceleration section the vehicle must attain a speed equal to that of the traveling wave in the winding. Moreover, the magnetic field in the air gaps of its rotor must be oriented in the same direction as the magnetic field of the traveling wave. Just when this happens, said resistor is short-circuited, and the motor comes into synchronism and begins to propel the vehicle. At the next (acceleration) section the winding turn length is gradually increased, and the velocity of the current traveling wave increases.

As was noted above, the acceleration of the vehicle is realized by both the synchronizing device and the synchronizing mechanism. The synchronizing device serves to changed the rotor pole pitches in steps (simultaneously with changing the turn length of the stator winding during the vehicle motion) by switching on/off the corresponding units. The synchronizing mechanism is designed to smoothly change the rotor pole pitches by drawing apart or together the magnetic units belonging to the rotor front and back halves. The work of the synchronizing device **47** and the synchronizing mechanism **611** may alternate in different combinations.

Let us consider how the synchronizing device **47** works when the vehicle moves along the acceleration section. This device is switched on by its sensor signals and increases in steps the pole pitch length in compliance with increasing traveling wave velocity. Then the propulsion force grows that helps the vehicle to overcome the growing resistance of the air and vehicle inertia.

The synchronizing device must switch on the rotor units in strict sequence. Each signal from the next sensor must switch on its drive gear, moving downward those two magnets of contrary polarity (belonging to the front and rear parts of the rotor) which are closest to the rotor center. Either of the drive gears may be used: electric, hydraulic, or pneumatic.

The synchronizing mechanism **61** smoothly increases the pole pitch length by drawing apart or together the magnetic units belonging to the front and back halves of the rotor units. Said synchronizing mechanism begins working just after several unit pairs have been engaged. It reacts on the increment of the length of the winding turns and changes the distances between the both halves of the rotor, thus allowing the propulsion force and the vehicle speed to be increased. In its simplest form this mechanism is formed from a long screw having both right and left-hand rectangular threads on both its halves.

**Example of approximate PMLSM evaluation**

Initial data

Dimensions of the details (in meters): $W_m = 0.2$, $h_m = 0.24$, $h_g = 0.1$, $t_t = 0.05$, $g = 0.06$, $\delta = 0.01m$, coercive force $H_c = 8.9 \cdot 10^5 A/m$, $V_m = 180 M/s$, $f = 60Hz$, $j = 10^7 A/m^2$, specific gravity of the magnet material $d_m = 7.4$ $kG/dm^3$, specific gravity of the core steel $d_{Fe} = 7.8 \ kG/dm^3$.

The magneto motive force - $e_m$ in a unit is

$$e_m = \mu_0 H_c h_m = 0.2684,$$

the internal magnetic reluctance per 1m is

$$r_{in} = h_m/\mu_r/w_m = 1.1215,$$

the total reluctance of two gaps per 1m is

$$r_g = g/2/h_g = 0.3,$$

the magnetic flux in one gap per 1m is

$$\Psi =$$

$$e/2/(r_{in}+r_g) = 0.0944Wb,$$

the magnetic flux density in the gap is

$$B = \Psi/h_g = 0.944T,$$

the permissible current value in one gap is

$$I_m = 12vj(g-2\delta)^2 = 7.68 \cdot 10^5 A,$$

the maximal propulsion force of the linear motor is

$$F_{max} = 2BI_m h_g q \geq 10 \text{ tons,}$$

the maximal cross-section of the upper winding end-face is

$$S_w = 2.5v(g-2\delta)^2 = 0.016m^2$$

the weight of the motor magnets is

$$G_m = \lambda_m h_m w_m d_m \cdot 0.8 = 0.9 \text{ ton,}$$

the weight of the rotor steel cores is

$$G_c = 2G_m = 1.8 \text{ ton,}$$

the weight of the rotor PMLSM is $G_{PMLSM} = 2.8$ ton,
the overall dimensions of the rotor PMLSM are (0.6 x 0.6 x 3.1)m

## Claims

1. A Magneto-Dynamic Levitation and Stabilizing Self-Regulating System (MDLSS), comprising at least one unit, said unit comprising:

a stator assembly and a levitator assembly magnetically coupled to the stator assembly and movable with respect thereto;

wherein said stator assembly includes a pair of substantially identical elongated laminated steel cores, each including a back and a pair of substantially identical tips, the back having external and internal lateral surfaces, wherein each of said tips is being wider than the back and has a sharpened end thereon,

wherein said cores are positioned with the tips of one of said cores towards the tips of another one of said cores, such that an air gap exists therebetween, and

wherein said stator assembly further includes non-magnetic conductive screens covering said external and internal lateral surfaces of the back of each core;

wherein said levitator assembly includes four permanent magnets connected by rigid ties and positioned in two levels with two permanent magnets of the same polarity in each level, respective permanent magnets in said two levels positioned one under another being of opposite polarity, the permanent magnets having substantially identical rectangular cross-section with a middle point thereof,

wherein a distance between the sharpened ends of the tips of each core is substantially equal to a distance between middle points of the permanent magnets positioned in each of said two levels, and wherein said permanent magnets are disposed in the air gap existing between the tips of the cores of the stator assembly;

wherein said levitator assembly has an equilibrium position in which the permanent magnets in each of said two levels are being situated centrally in the air gap between respective tips of the opposite cores and with the middle points of the permanent magnets in precise registration with the sharpened end of a respective one of said tips of the cores of the stator assembly;

wherein said permanent magnets of the levitator assembly generate an original magnetic field and magnetize the steel cores of the stator assembly which in turn create a secondary magnetic filed, and

wherein, once said levitator assembly has been displaced from the equilibrium position, the original and the secondary magnetic fields create a stabilizing force returning the levitator assembly to the equilibrium position.

2. The Magneto-Dynamic Levitation and Stabilizing Self-Regulating System of claim 1, further comprising a common foundation having a bottom and a pair of spaced apart side walls,

wherein a body moves along a trajectory pre-determined in said common foundation, said body having a bottom and a pair of side walls,

first and second pairs of identical said units magnetically coupling the body and the common foundation, said first pair of substantially identical said units being installed symmetrically between the bottoms of the body and the common foundation,

each unit of said second pair of substantially identical said units being installed between respective side walls of the body and the common foundation in precise registration therebetween,

the stator assemblies of said units being installed on the common foundation, and

the levitator assemblies of said units being installed on the body;

and

wherein said stabilizing forces created in each of the units once the equilibrium position has been violated provide stable hovering and flight of the body along the pre-determined trajectory.

3. The Magneto-Dynamic Levitation and Stabilizing Self-Regulating System of claim 2,

wherein said stator assembly extends substantially the length of the pre-determined trajectory,

wherein a distance between the respective tips of the opposite steel cores of the stator assembly is invariable along the length of the pre-determined trajectory,

wherein said levitator assembly extends substantially the length of the body and includes a plurality of substantially identical levitator sub-assemblies, each comprising said four permanent magnets connected by rigid ties and positioned in two levels with two permanent magnets of the same polarity in each level, adjacent permanent magnets in each two adjacent levitator sub-assemblies being of opposite polarity and having a certain period of alteration of the permanent magnets' polarity along the length of the body, and

wherein, during the motion of the body along the pre-determined trajectory, the permanent magnets of the levitator assembly produce magnetic fluxes in the steel cores of the stator assembly, said magnetic fluxes alternating periodically with a frequency proportionate to speed of the body and inversely proportionate to the period of alteration of the permanent magnets' polarity along the length of the body.

4. The Magneto-dynamic Levitation and Stabilizing Self-Regulating System of claim 3, further including an iron insertion strip connecting the permanent magnets positioned in two different said levels and positioned between two permanent magnets in the same one of said two levels of the levitator assembly, thereby constituting a magnet assembly, said insertion strip being secured by one end thereof to the body,

wherein the permanent magnets in each of said two levels of said magnet assembly are magnetized parallel to a straight line connecting the sharpened ends of the respective said tips of the opposite cores;

wherein an orientation of magnetization in one of said two levels is opposite to an orientation of magnetization in another one of said two levels;

wherein a displacement of the magnet assembly in the direction parallel to the orientation of magnetization in any of said two levels towards one of said two steel cores, engenders an internal destabilizing force which tends to further attract the magnet assembly to said one of the two steel cores;

wherein a displacement of the magnet assembly in the direction perpendicular to the direction of magnetization and the pre-determined trajectory engender an internal stabilizing force tending to reduce the displacement and to bring the magnet assembly back to the equilibrium position;

wherein a turn of the magnet assembly around an axis parallel to the direction of magnetization engenders an internal stabilizing torque which tends to return the magnet assembly to the equilibrium position; and

wherein directions of said stabilizing and destabilizing forces are reciprocally perpendicular.

5. The Magneto-Dynamic Levitation and Stabilizing Self-Regulating System of claim 4, wherein the magnet assembly and a pair of said steel cores of the stator assembly constitute a double-loop magnetic circuit comprising a pair of loops;

wherein each of said pair of the loops includes said iron insertion strip, which is common for both of said pair of loops, two permanent magnets located at the different of said two levels, at one side from the iron insertion strip, one steel core, and two air gaps between the permanent magnets and respective tips of the steel cores; wherein the iron insertion strip is in a unsaturated state;

wherein zero magnetic reluctance of the unsaturated iron insertion strip creates magnetic fluxes in the steel cores of the stator assembly, said magnetic fluxes created in each of said pair of the loops being independent;

wherein a displacement of the magnet assembly towards one of said steel cores affects parameters of said magnetic circuit, such that in one of said pair of the loops both air gaps decrease, thereby reducing their magnetic reluctance and increasing magnetic flux in the respective steel core; and such that in another one of said pair of the loops both air gaps increase, thereby increasing their magnetic reluctance and reducing magnetic flux in the respective steel core.

6. The Magneto-Dynamic Levitation and Stabilizing Self-Regulating System of claim 5, wherein the destabilizing force is proportionate to the difference of two magnetic fluxes, one of which runs through a full surface of the tip of one of said steel cores, and another of which runs through a full surface of respective tip of the opposite steel core; and

wherein said stabilizing force is proportionate to the difference of two sums, one of which comprises magnetic fluxes running through bottom halves of the surfaces of the tips on both opposite steel cores, and another sum comprises the magnetic fluxes running through upper halves of the same tips.

7. The Magneto-Dynamic Levitation and Stabilizing Self-Regulating System of claim 1, wherein a length and a width of the tips of the steel cores are chosen so as to avoid saturation of the tips at any displacement of the magnet assembly, and to cause the density of said magnetic flux penetrating into the tip of the steel core to decline at least twenty (20) times when displaced away from the sharpened end of tip towards the back of the steel core, said ends of the tips of the steel core being sharpened at an acute angle.

8. The Magneto-Dynamic Levitation and Stabilizing Self-Regulating System of claim 1, wherein the internal and external lateral surfaces of the back of the steel core are covered by non-magnetic conductive metallic screens both inside and outside of said unit;

said screens suppressing magnetic dissipation fluxes generated in the steel cores, thereby maintaining the steel core saturation along the length of the back of the steel core during the body movement, and thereby lowering the destabilizing force.

9. The Magneto-Dynamic Levitation and Stabilizing Self-Regulating System of claim 4, wherein the air gaps between the permanent magnets and the sharpened ends of the respective tips are chosen of such a size as to maintain the back of the steel core saturated during the movement along the pre-determined trajectory;

wherein a length and a width of the back of the steel core are chosen in such a manner that when the levitator assembly is displaced towards a respective steel core by a half of said air gap distance, the back of the opposite steel core remains saturated; and

wherein a thickness of said iron insertion strip is chosen in such a manner that when the magnet assembly is displaced towards any steel core by a half of said air gap distance, the insertion strip remains unsaturated.

10. The Magneto-Dynamic Levitation and Stabilizing Self-Regulating System of Claim 1, wherein a pair of said identical units connected by rigid non-magnetic ties constitute a sub-system;

wherein the elongated steel cores of the stator assembly in each of the units have respective cylindrical gen-

EP 0 894 660 A1

eratrices; wherein said identical units in each said sub-system are connected in such a manner that directions of magnetization of the permanent magnets in each of the units therein are reciprocally perpendicular and the cylindrical generatrices of the elongated steel cores in the both units are parallel to each other;

wherein, once the levitator assembly in each of the sub-system has been displaced from the equilibrium position, a destabilizing force is created; and

wherein the destabilizing force of one unit is compensated by the stabilizing force of another unit,

11. The Magneto-Dynamic Levitation and Stabilizing Self-Regulating System of Claim 10, wherein a vehicle moves along a pre-determined trajectory,

wherein a pair of said identical sub-systems are joined into a system by rigid non-magnetic ties across said vehicle; and

wherein all destabilizing forces and destabilizing torques created in one of said sub-systems are compensated by the stabilizing forces and destabilizing torques created in another one of said sub-systems.

2. The Magneto-Dynamic Levitation and Stabilizing Self-Regulating System (MDLSS), comprising:

a guide-way assembly, including:

a common concrete foundation;
a plurality of cylindrical laminated steel cores positioned in pairs symmetrically with respect to each other and extended along the length of the guide-way, each steel core having a C-shaped cross-section with a back and a pair of sharpened tips extended towards an opposite one in the pair of the steel cores; and
a plurality of non-magnetic metallic screens covering external and internal lateral surfaces of said backs of the laminated steel cores substantially the length thereof;
wherein the steel cores are secured on said common concrete foundation by rigid non-magnetic ties, with an air gap between corresponding opposite tips of the steel cores in each pair thereof being invariable along the guide-way - stator length; and
a vehicle-levitator assembly, including:
a plurality of identical iron insertion strips extending along the vehicle;
a plurality of magnet assemblies disposed along the length of the vehicle and connected together by rigid non-magnetic ties;
wherein each magnet assembly is disposed symmetrically in said air gap between opposite steel cores in each said pair of the steel cores.

13. A method for magnet-dynamic levitation of a body moving along a trajectory, the method comprising the steps of:

providing a common foundation having a bottom and a pair of spaced apart side walls, and determining said trajectory in said common foundation;
providing a body having a bottom and a pair of spaced apart side walls;
providing at least four substantially identical units, each including stator and levitator assemblies magnetically coupled together; wherein said stator assembly includes:
a pair of substantially identical elongated laminated steel cores, each steel core having a back and a pair of substantially identical tips, the back having internal and external lateral surfaces, wherein each of said tips is wider than the back and has a sharpened end thereon extended towards the sharpened ends of the tips of the opposite steel core in said pair of the steel cores, and
non-magnetic conductive screens covering said internal and external lateral surfaces of the back of said steel cores;
wherein said levitator assembly includes:
four permanent magnets rigidly tied and arranged in two levels with two permanent magnets of the same polarity in each of said two levels and with permanent magnet of opposite polarity positioned one under another in the different of said two levels, said permanent magnets being positioned symmetrically within an air gap existing between the sharpened ends of the tips of the steel cores of the stator assembly;
installing a first pair of said four units symmetrically between the bottoms of the body and the common foundation, and installing a second pair of said four units symmetrically between side walls of the body and the common foundation in precise registration with each other,
such that said stator assemblies of the units are installed on the common foundation and are rigidly tied to each other, and such that said levitator assemblies of the units are installed on the body and are rigidly tied to each other; and
driving the body along the pre-determined trajectory.

31

**14.** The method of claim 13, wherein the units in the first pair thereof counterbalance weight of the body and support the body at a certain level above the bottom of the common foundation, and

wherein the units in the second pair thereof counterbalance both centrifugal forces arising during turns of the body and any external lateral forces applied to the body.

**15.** The method of claim 13, wherein the permanent magnets of the levitator assembly, said pair of the steel cores of the stator assembly and air gaps between each permanent magnets and a respective tip constitute a double-loop magnetic circuit, comprising a left loop and a right loop, having respective magnetic fluxes, wherein each of said air gaps has a magnetic reluctance;

wherein a displacement of the permanent magnets towards the steel core in the right loop decreases magnetic reluctance of the air gaps in the right loop and increases the magnetic reluctance of the air gaps in the left loop, that causes increase of the magnetic flux in the right loop and decrease of the magnetic flux in the left loop, thereby increasing saturation of the back of the right core and increasing the magnetic reluctance thereof, and thereby decreasing saturation of the back of the left core and decreasing the magnetic reluctance thereof;

wherein a displacement of the permanent magnets towards the steel core in the left loop causes inversely symmetrical processes with respect to the processes created at the displacement of the permanent magnets towards the steel core in the right loop;

wherein, at a side displacement of the permanent magnets, an increment of the magnetic reluctance of the air gaps is compensated by the inverse increment of the magnetic reluctance of the saturated steel in the back of the respective core, such that a resulting magnetic reluctance in each of said loops remains approximately equal to each other; and

wherein, at said side displacement of the permanent magnets, the difference between the magnetic fluxes in the right and left cores is approximately zero.

**16.** The Magneto-Dynamic Levitation and Stabilizing Self-Regulating System (MDLSS), comprising:

a guide-way assembly, including:

a common concrete foundation;

a plurality of cylindrical laminated steel cores positioned in pairs symmetrically with respect to each other and extended along the length of the guide-way, each steel core having a C-shaped cross-section with a back and a pair of sharpened tips extended towards an opposite one in the pair of the steel cores; and

a plurality of non-magnetic metallic screens covering external and internal lateral surfaces of said backs of the laminated steel cores substantially the length thereof;

wherein the steel cores are secured on said common concrete foundation by rigid non-magnetic ties, with an air gap between corresponding opposite tips of the steel cores in each pair thereof being invariable along the guide-way - stator length;

a vehicle-levitator assembly, including:

a plurality of identical iron insertion strips extending along the vehicle;

a plurality of magnet assemblies disposed along the length of the vehicle and connected together by rigid non-magnetic ties;

wherein each magnet assembly is disposed symmetrically in said air gap between opposite steel cores in each said pair of the steel cores; and

a linear synchronous motor for a high speed ground transportation vehicle, comprising:

(a) a linear stator/guideway assembly extended along trajectory of said vehicle's motion, said stator/guideway assembly including a pair of mirror-symmetrical stator windings each having distinct sections thereof, each said stator winding including a plurality of turns having different length along said distinct sections, Wherein, being powered with three-phase alternating current, said stator windings generate traveling waves having variable velocities and accelerations at said distinct sections of the stator windings, frequency of said current being constant along all said distinct sections of the stator windings,

each of said turns of the stator windings including two vertical working segments, each having a layer of conductors;

(b) a permanent magnet rotor, comprising an even number of substantially identical magnetic units disposed in a row along said vehicle, said row being divided into front half and back half thereof,

each said magnetic unit including two steel cores and a permanent magnet magnetized vertically and movable between downward and upward positions thereof with respect to said steel cores, two air gaps being formed therebetween,

said permanent magnet, being in the downward position thereof, creates permanent magnetic field in said air gaps, said layers of conductors of the working segments of the stator windings extending through said air gaps, so that the traveling wave interacts with said permanent magnetic field in the air gaps, thereby creating propulsion force propelling the vehicle along said trajectory, and

wherein a pole-pitch of said permanent rotor increases when said permanent magnet is in the downward position thereof and decreases when said permanent magnet is in the upward position thereof;

(c) a synchronizing device operatively associated with said rotor to vary step-wise the length of the pole-pitch thereof during the vehicle's motion by moving the permanent magnets downward and upward; and

(d) a synchronizing mechanism operatively associated with said rotor to provide smooth variation of the length of the pole-pitch of the rotor during the vehicle's motion by varying distance between said front and back halves of the raw of the units,

said synchronizing device and mechanism performing coordination between the length of the turns of the stator windings and the length of the pole-pitch of the rotor.

17. The linear synchronous motor of claim 16, wherein said distinct sections include acceleration section, deceleration section and constant velocity section extending therebetween,
wherein in the acceleration section, the length of the turns of the stator winding increases in the direction towards the constant velocity section,
wherein along the constant velocity section, the length of the turns is substantially constant, and
wherein in the deceleration section, the length of the turn decreases in the direction from the constant velocity section.

18. The linear synchronous motor of claim 16, wherein said stator windings are three-phase windings including A,B,C phases.

19. The linear synchronous motor of claim 18, wherein said stator windings are supported by toothed holders having respective slots, said layers of conductors of the vertical working segments of the stator windings being accommodated in said respective slots.

20. The linear synchronous motor of claim 16, wherein polarities of the permanent magnets in said front half of the raw of said units are identical, wherein polarities of the permanent magnets in said back half of the raw of said units are identical and opposite to the polarities of the permanent magnets in the front half of the raw of said units.

21. The linear synchronous motor of Claim 19, wherein each said turn of the stator winding includes front and back vertical working segments, and side horizontal parts connecting said working segments; said side horizontal parts forming monolithic multilayer upper and bottom end-faces of sandwiched conductors separated by an inner layer of electrical insulation; said upper end-face being inserted loosely in a hollow between a respective one of said steel cores and the permanent magnet of the rotor; said bottom end-face and said holder being rigidly attached to a concrete beam of the stator/guideway assembly; each of the phases A,B,C of the stator winding comprises a certain even number of turns buses which are placed into said slots of the holder in a predetermined sequence.

22. The linear synchronous motor of claim 21, wherein said turns of the stator windings are made of copper buses.

23. The linear synchronous motor of claim 21, wherein the length of the turns of the stator winding and thickness of the buses are proportional to the assigned speed of the vehicle in a given cross-section of the guideway.

24. The linear synchronous motor of claim 21, wherein each bus is bent in such a way that half of said certain number of its turns are coiled clockwise and another half of said certain number of the turns are coiled counterclockwise on every fragment of the stator winding, with the length of the turns equal to the length of the traveling wave.

25. The linear synchronous motor of claim 16, wherein said permanent magnet has a substantially rectangular cross-section with upper and bottom edges thereof, and is provided with a pair of saddle-shaped pole shoes, each installed on a respective one of said upper and bottom edges of the permanent magnet,
wherein said steel cores include "C"-shaped steel cores, and wherein once shifted downward, said saddle-shaped pole shoes and "C"-shaped steel cores split the magnetic flux in two equal parts, turning its magnetic lines in horizontal position and concentrating them in the air gaps of said unit,thereby providing intensive transformation of electromagnetic energy of current in the working segments of the stator winding into the moving vehicle's mechanical energy.

26. The linear synchronous motor the PMLSM of claim 25, wherein in said unit once said permanent magnet has been shifted upward the magnetic flux in the air gaps disappears and magnetic lines are closed through the upper core shoes of the steel cores omitting said working segments of the stator winding;

**27.** The linear synchronous motor of claim 26, wherein the steel cores of the front half of said raw of units are rigidly connected, wherein the steel cores of the back half of said raw are rigidly connected, and wherein said vehicle includes chassis having longitudinal slots; said front and back halves being installed in the longititudinal slots of the chassis and moving apart and together during vehicle motion, thus smoothly changing the length of rotor pole pitch.

**28.** The linear synchronous motor claim 27, wherein the steel cores are connected with the vehicle chassis and moved exclusively in the direction of the vehicle motion; wherein the permanent magnets are connected with the steel cores and move exclusively upward and downward with respect to the steel cores, and wherein; the forces of attraction of the permanent magnets to the steel cores are completely compensated by the reactions of the ties between the steel cores and the permanent magnets.

FIG. 1A

EP 0 894 660 A1

FIG. 1B

FIG.1C

FIG. 2A

FIG.2B

FIG. 2C

EP 0 894 660 A1

FIG. 3B

FIG. 3A

*FIG. 3C*

*FIG. 3E*

*FIG. 3D*

EP 0 894 660 A1

FIG.4

FIG.5

FIG. 6

*FIG. 7*

FIG. 8A

FIG. 8B

FIG.9

*FIG.10A*

*FIG. 10B*

FIG.10C

FIG. 10D

FIG. 11

FIG. 12

FIG. 13

**European Patent Office**

**EUROPEAN SEARCH REPORT**

Application Number

EP 97 30 5637

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E<br>A | US 5 652 472 A (TOZONI) 29 July 1997<br>* the whole document * | 1-15<br>16 | B60L13/10 |
| A | WO 94 23965 A (BERDUT) 27 October 1994<br><br>* the whole document * | 1,12,13,<br>16 | |
| A | US 5 440 997 A (CROWLEY) 15 August 1995<br><br>* figures 14,15 * | 1,2,12,<br>16 | |
| A | DE 35 23 345 A (WEH) 2 January 1987<br><br>* the whole document * | 1,12,13,<br>16 | |
| A | US 3 791 309 A (BAERMANN) 12 February 1974<br><br>* the whole document * | 1,2,12,<br>16 | |
| A | US 4 931 677 A (HEIDELBERG ET AL.) 5 June 1990<br>* the whole document * | 16,17 | TECHNICAL FIELDS SEARCHED (Int.Cl.6)<br><br>B60L |

The present search report has been drawn up for all claims

| Place of search | Date of completion of the search | Examiner |
|---|---|---|
| THE HAGUE | 30 December 1997 | Bolder, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)